# EUROPEAN PATENT APPLICATION

(11) **EP 4 661 439 A1**
(43) Date of publication of application: **10.12.2025**
(21) Application number: 24763184.9
(22) Date of filing: 28.02.2024
(51) Int. Cl.: H04W 4/029

(54) **COMMUNICATION METHOD, APPARATUS AND SYSTEM, AND STORAGE MEDIUM**

(30) Priority: 01.03.2023 CN 202310232625
(71) Applicant: Huawei Technologies Co., Ltd., Shenzhen, Guangdong 518129 (CN)
(72) Inventor: SENG, Shuming, Shenzhen, Guangdong 518129 (CN); LI, Chenwan, Shenzhen, Guangdong 518129 (CN); CHEN, Lei, Shenzhen, Guangdong 518129 (CN); LI, Zhijun, Shenzhen, Guangdong 518129 (CN); WU, Yiling, Shenzhen, Guangdong 518129 (CN)
(74) Representative: Goddar, Heinz J.
(86) International application number: PCT/CN2024/078948
(87) International publication number: WO 2024/179504

(57) **Abstract**

This application discloses a communication method, apparatus, and system, and a storage medium. In this application, an AMF or an LMF triggers a location service, or triggers a location service and a first service. When receiving a location service request and a first service request, an access network side sends a first message to a low-capability terminal, where existing signaling between the low-capability terminal and the access network side may be reused as the first message, and the first message includes positioning configuration information; and the low-capability terminal sends a positioning signal to the access network side based on the positioning configuration information, to position the low-capability terminal.

## Description

This application claims priority to Chinese Patent Application No. 202310232625.X, filed with the China National Intellectual Property Administration on March 1, 2023 and entitled "COMMUNICATION METHOD, APPARATUS, SYSTEM, AND STORAGE MEDIUM", which is incorporated herein by reference in its entirety.

### TECHNICAL FIELD

This application relates to the field of communication technologies, and in particular, to a communication method, apparatus, and system, and a storage medium.

### BACKGROUND

Radio frequency identification (radio frequency identification, RFID) is one of automatic identification technologies, is used for non-contact bidirectional data communication in a wireless radio frequency manner, is mainly applied to an identity identification scenario, and can also be used for user data reading and writing in some scenarios. A radio frequency identification system includes a reader (reader) and a tag (tag). The reader can read tag information in the tag or write tag information into the tag.

An existing low-capability terminal does not support a complex design, and signaling exchanging cannot be designed to be too complex, and consequently cannot support an existing complex positioning procedure.

### SUMMARY

This application provides a communication method, apparatus, and system, and a storage medium, to support a low-capability terminal in completing positioning.

According to a first aspect, a communication method is provided. The method includes: A terminal receives a first message from an access network device, where the first message includes positioning configuration information, and the first message is at least one of the following messages: a select message, a paging message, a query message, a random access response, a beacon (beacon), a system message, a synchronization message, a location sequence, and an excitation message; and the terminal sends at least one positioning signal to the access network device based on the positioning configuration information.

For example, the terminal may alternatively be replaced with a chip in the terminal.

In this aspect, the access network device reuses an existing procedure of the low-capability terminal, and sends the first message to the low-capability terminal, so that the low-capability terminal sends the positioning signal to an access network side based on the positioning configuration information, to position the low-capability terminal.

In a possible implementation, the positioning configuration information includes at least one of the following information: a sending periodicity of the positioning signal, a quantity of times of sending the positioning signal, and a positioning signal type.

In this implementation, the terminal sends the positioning signal based on the positioning configuration information, so that the positioning signal can be accurately sent, positioning reliability can be improved, and signaling overheads can be reduced.

In another possible implementation, the positioning signal type includes at least one of the following: a location sequence, a 16-bit random number, an electronic factory code (electronic product code, EPC), uplink data, a random access request, and a user identifier.

In this implementation, positioning may be performed by using a new location sequence, or positioning may be performed by reusing existing uplink data or control information sent by the terminal. This helps reduce signaling overheads.

In another possible implementation, the positioning signal is at least one of the following: a location sequence, a 16-bit random number, an electronic factory code (electronic product code, EPC), uplink data, a random access request, and a user identifier.

In this implementation, positioning may be performed by using a new location sequence, or positioning may be performed by reusing existing uplink data or control information sent by the terminal. This helps reduce signaling overheads.

In still another possible implementation, the method further includes: The terminal receives a stop indication from the access network device, where the stop indication indicates to stop sending the positioning signal; and the terminal stops sending the positioning signal to the access network device.

In this implementation, if the positioning configuration information does not include the quantity of times of sending the positioning signal, the access network device may send the stop indication to the terminal; or if the positioning configuration information includes the quantity of times of sending the positioning signal, in some scenarios, the access network device may temporarily indicate the terminal to stop sending. In this way, signaling overheads can be reduced.

According to a second aspect, a communication method is provided. The method includes: An access network device sends a first message to a terminal, where the first message includes positioning configuration information, and the first message is at least one of the following messages: a select message, a paging message, a query message, a random access response, a beacon, a system message, a synchronization message, a location sequence, and an excitation message; and the access network device receives at least one positioning signal from the terminal based on the positioning configuration information.

For example, the access network device may alternatively be replaced with a chip in the access network device.

In this aspect, the access network device reuses an existing procedure of the low-capability terminal, and sends the first message to the low-capability terminal, so that the low-capability terminal sends the positioning signal to an access network side based on the positioning configuration information, to position the low-capability terminal.

In a possible implementation, the method further includes: The access network device receives a first service request and a location service request, where the first service request is used to request to perform a first service, the location service request is used to request to perform a location service, and the first service includes at least one of the following services: a paging service, an inventory service, and a sensing service.

In another possible implementation, the first service request and the location service request are included in a same message.

In this implementation, the AMF may send the first service request and the location service request together to the access network device by controlling a time sequence. For example, after sending a first location service request, the AMF may wait for a period of time. If the AMF receives a second location service request carrying first indication information, the AMF simultaneously sends the first service request and the second location service request to the access network device. The first service request and the second location service request are consecutive in slots, and the AMF transparently transmits the second location service request. After sending the first location service request and waiting for a period of time, if the AMF does not receive the second location service request carrying the first indication information, the AMF initiates a normal first service procedure or does not respond.

Alternatively, the AMF may place a second location service request field into a first service request field, and send them together to the access network device.

In still another possible implementation, the positioning configuration information is from a location management network element, and the positioning configuration information includes at least one of the following information: a sending periodicity of the positioning signal, a quantity of times of sending the positioning signal, and a positioning signal type.

In still another possible implementation, the positioning signal includes at least one of the following: a location sequence, a 16-bit random number, an electronic factory code EPC, uplink data, a random access request, and a user identifier.

In still another possible implementation, if the first service is an inventory service, the EPC or the user identifier is used to perform inventory on the terminal.

In still another possible implementation, if the first service is a paging service, the EPC or the user identifier identifies the terminal, and the 16-bit random number or the random access request is used by the terminal to request to access the access network device.

In still another possible implementation, if the first service is a sensing service, the uplink data includes data collected by the terminal.

In still another possible implementation, the method further includes: The access network device measures the at least one positioning signal to obtain a measurement result; and the access network device sends the measurement result.

In still another possible implementation, the method further includes: The access network device sends a stop indication to the terminal, where the stop indication indicates to stop sending the positioning signal.

According to a third aspect, a communication method is provided. The method includes: An access and mobility management network element (access and mobility management function, AMF) sends first indication information to a location management network element, where the first indication information indicates that a location service is associated with a first service; and the AMF receives a location service request from the location management network element, where the location service request is used to request to perform the location service, and the location service request includes the first indication information; the AMF sends a first service request and the location service request to an access network device based on the first indication information, where the first service request is used to request to perform the first service; and the AMF receives a positioning result from the location management network element.

In this aspect, the first indication information may be associated with the first service request and the location service request that are initiated by the AMF. The first indication information may be a service association identifier (transaction identification, Transaction ID), or may be indication information including a field.

For example, the AMF may alternatively be replaced with a chip in the AMF.

The AMF associates the location service with the first service by using the first indication information. Therefore, when sending the first service request to the access network device, the AMF further sends the location service request. The access network device reuses an existing procedure of a low-capability terminal, and sends a first message to the low-capability terminal, so that the low-capability terminal sends a positioning signal to an access network side based on positioning configuration information, to position the low-capability terminal.

In a possible implementation, the first service includes at least one of the following services: a paging service, an inventory service, and a sensing service.

In another possible implementation, the positioning result is determined based on a measurement result that is sent by the access network device after the access network device performs measurement.

In still another possible implementation, the first service request and the positioning request are in a same message.

In still another possible implementation, the location service request further includes the positioning configuration information, where the positioning configuration information includes at least one of the following information: a sending periodicity of the positioning signal, a quantity of times of sending the positioning signal, a positioning signal type, a sending time period of the positioning signal, a sending time offset value of the positioning signal, a sending frequency of the positioning signal, and an absolute time point for sending the positioning signal. The positioning signal type includes at least one of the following: a location sequence, a 16-bit random number, an EPC, uplink data, a random access request, and a user identifier. In still another possible implementation, if the first service is an inventory service, the EPC or the user identifier is used to perform inventory on at least one terminal.

In still another possible implementation, if the first service is a paging service, the EPC or the user identifier identifies the terminal, and the 16-bit random number or the random access request is used by the terminal to request to access the access network device.

In still another possible implementation, if the first service is a sensing service, the uplink data includes data collected by the terminal.

According to a fourth aspect, a communication method is provided. The method includes: A location management network element (location management function, LMF) receives first indication information from an access and mobility management network element, where the first indication information indicates that a location service is associated with a first service; the LMF sends a location service request to the access and mobility management network element, where the location service request is used to request to perform the location service, and the location service request includes the first indication information; and the LMF receives a measurement result, where the measurement result is obtained by measuring at least one positioning signal received from a terminal.

In a possible implementation, the measurement result includes the first indication information.

For example, the LMF may alternatively be replaced with a chip in the LMF.

In a possible implementation, the first service includes at least one of the following services: a paging service, an inventory service, and a sensing service.

In another possible implementation, the method further includes: The LMF generates a positioning result based on the measurement result; and the LMF sends the positioning result to the access and mobility management network element.

In still another possible implementation, the measurement result includes the first indication information.

In still another possible implementation, the location service request further includes positioning configuration information, where the positioning configuration information includes at least one of the following information: a sending periodicity of the positioning signal, a quantity of times of sending the positioning signal, a positioning signal type, a sending time period of the positioning signal, a sending time offset value of the positioning signal, a sending frequency of the positioning signal, and an absolute time point for sending the positioning signal. The positioning signal type includes at least one of the following: a location sequence, a 16-bit random number, an EPC, uplink data, a random access request, and a user identifier.

According to a fifth aspect, a communication method is provided. The method includes: An LMF receives a location service request from an access and mobility management network element, where the location service request is used to request to perform a location service and a first service, or a location service on a terminal; and the LMF sends a first service and location service request to an access network device, where the first service and location service request is used to request to perform the location service, or the location service and the first service on the terminal, and the first service and positioning request includes positioning configuration information.

For example, the LMF may alternatively be replaced with a chip in the LMF.

In this aspect, the LMF sends the first service and location service request to the access network device, and the access network device reuses an existing procedure of the low-capability terminal, and sends a first message to the low-capability terminal, so that the low-capability terminal sends a positioning signal to an access network side based on the positioning configuration information, to position the low-capability terminal.

In a possible implementation, the first service includes at least one of the following services: a paging service, an inventory service, and a sensing service.

In another possible implementation, the first service and location service request includes indication information, where the indication information indicates that the first service is associated with the location service.

In still another possible implementation, the indication information is a service association identifier.

In still another possible implementation, the positioning configuration information includes at least one of the following information: a sending periodicity of the positioning signal, a quantity of times of sending the positioning signal, and a positioning signal type; and the positioning signal type includes at least one of the following: a location sequence, a 16-bit random number, an electronic factory code EPC, uplink data, a random access request, and a user identifier.

In still another possible implementation, the method further includes: The LMF receives a first service and location service response from the access network device, where the first service and location service response includes a first service result, a measurement result, and the service association identifier, and the measurement result is obtained by the access network device by measuring at least one positioning signal received from the terminal; and the LMF sends a location service response to the access and mobility management network element, where the location service response includes the first service result and a positioning result.

In still another possible implementation, the first service and location service response includes identifiers of a plurality of access network devices and a plurality of measurement results corresponding to the identifiers of the plurality of access network devices; and the location service response includes identifiers of a plurality of access network devices and one positioning result corresponding to the identifiers of the plurality of access network devices; or the location service response includes identifiers of a plurality of access network devices and a plurality of positioning results corresponding to the identifiers of the plurality of access network devices.

In still another possible implementation, the first service and positioning response includes a plurality of EPCs and a plurality of measurement results corresponding to the plurality of EPCs; and the location service response includes a plurality of EPCs and a plurality of positioning results corresponding to the plurality of EPCs.

According to a sixth aspect, a communication method is provided. The method includes: An AMF determines to trigger a location service, or a first service and a location service; and the AMF sends a first service and location service request to an access network device, where the first service and location service request is used to request to perform the location service, or the location service and the first service, and the first service and location service request includes positioning configuration information.

For example, the AMF may be replaced with a chip in the AMF.

In this aspect, when determining to trigger a first service and location service procedure, the AMF sends the first service and location service request to the access network device, and the access network device reuses an existing procedure of a low-capability terminal, and sends a first message to the low-capability terminal, so that the low-capability terminal sends a positioning signal to an access network side based on the positioning configuration information, to position the low-capability terminal.

In a possible implementation, the first service includes at least one of the following services: a paging service, an inventory service, and a sensing service.

In another possible implementation, the first service and location service request include indication information, where the indication information is a service association identifier.

In still another possible implementation, that the AMF determines to trigger the first service and the location service includes: The AMF sends a location service request to a location management network element, where the location service request is used to request to perform the location service, or the location service and the first service on the terminal; and the AMF receives a location service response from the location management network element, where the location service response indicates that the access network device has a capability of performing the location service.

In still another possible implementation, the method further includes: The AMF receives a first service and location service response from the access network device, where the first service and location service response includes a first service result, a measurement result, and the service association identifier, and the measurement result is obtained by the access network device by measuring at least one positioning signal received from the terminal; the AMF sends a positioning calculation request to the location management network element, where the positioning calculation request includes the measurement result; and the AMF receives a positioning calculation response from the location management network element, where the positioning calculation response includes a positioning result, and the positioning result is determined based on the measurement result.

In still another possible implementation, the first service and location service response includes measurement results from a plurality of access network devices; the positioning calculation request includes identifiers of the plurality of access network devices and the plurality of measurement results corresponding to the identifiers of the plurality of access network devices; and the positioning calculation response includes the identifiers of the plurality of access network devices and one positioning result corresponding to the identifiers of the plurality of access network devices, or the positioning calculation response includes the identifiers of the plurality of access network devices and a plurality of positioning results corresponding to the identifiers of the plurality of access network devices.

In still another possible implementation, the first service and location service response includes a plurality of EPCs from a plurality of access network devices; the positioning calculation request includes a plurality of EPCs and a plurality of measurement results corresponding to the plurality of EPCs; and the positioning calculation response includes a plurality of EPCs and a plurality of positioning results corresponding to the plurality of EPCs.

In still another possible implementation, the positioning configuration information includes at least one of the following information: a sending periodicity of the positioning signal, a quantity of times of sending the positioning signal, and a positioning signal type; and the positioning signal type includes at least one of the following: a location sequence, a 16-bit random number, an EPC, uplink data, a random access request, and a user identifier.

According to a seventh aspect, a communication method is provided. The method includes: An LMF receives a location service request from an access and mobility management network element, where the location service request is used to request to perform a location service, or a location service and a first service on a terminal; the LMF receives a measurement result, where the measurement result is obtained by an access network device by measuring at least one positioning signal received from the terminal; and the LMF sends a positioning result, where the positioning result is determined based on the measurement result.

In a possible implementation, the first service includes at least one of the following services: a paging service, an inventory service, and a sensing service.

In another possible implementation, after that the LMF receives the location service request from the access and mobility management network element, the method further includes: The LMF sends a location service response to the access and mobility management network element based on the location service request, where the location service response indicates that the access network device has a capability of performing the location service.

In still another possible implementation, that the LMF receives the measurement result includes: The LMF receives a positioning calculation request from the access and mobility management network element, where the positioning calculation request includes the measurement result; or the LMF receives the measurement result includes: The LMF receives the measurement result from the access network device.

In still another possible implementation, the positioning calculation request includes identifiers of a plurality of access network devices and measurement results corresponding to the identifiers of the plurality of access network devices; and the positioning calculation response includes the identifiers of the plurality of access network devices and one positioning result corresponding to the identifiers of the plurality of access network devices, or the positioning calculation response includes the identifiers of the plurality of access network devices and a plurality of positioning results corresponding to the identifiers of the plurality of access network devices.

In still another possible implementation, if the first service is an inventory service, the positioning calculation request includes a plurality of EPCs and measurement results corresponding to the plurality of EPCs; and the positioning calculation response includes a plurality of EPCs and a plurality of positioning results corresponding to the plurality of EPCs.

According to an eighth aspect, a communication apparatus is provided. The communication apparatus may implement the method in the first aspect. For example, the communication apparatus may be a terminal or a chip in the terminal. The foregoing method may be implemented by software, hardware, or hardware executing corresponding software.

In a possible implementation, the apparatus includes a communication unit, where the communication unit is configured to receive a first message from an access network device, where the first message includes positioning configuration information, and the first message is at least one of the following messages: a select message, a paging message, a query message, a random access response, a beacon (Beacon), a system message, a synchronization message, a location sequence, and an excitation message; and the communication unit is further configured to send at least one positioning signal to the access network device based on the positioning configuration information.

Optionally, the positioning configuration information includes at least one of the following information: a sending periodicity of the positioning signal, a quantity of times of sending the positioning signal, a positioning signal type, a sending time period of the positioning signal, a sending time offset value of the positioning signal, a sending frequency of the positioning signal, and an absolute time point for sending the positioning signal.

Optionally, the positioning signal type includes at least one of the following: a location sequence, a 16-bit random number, an electronic factory code EPC, uplink data, a random access request, and a user identifier.

Optionally, the positioning signal is at least one of the following: a location sequence, a 16-bit random number, an electronic factory code EPC, uplink data, a random access request, and a user identifier.

Optionally, the communication apparatus further includes a processing unit, where the communication unit is further configured to receive a stop indication from the access network device, where the stop indication indicates to stop sending the positioning signal; and the processing unit is configured to control the communication unit to stop sending the positioning signal to the access network device.

According to a ninth aspect, a communication apparatus is provided. The communication apparatus may implement the method in the second aspect. For example, the communication apparatus may be an access network device or a chip in the access network device. The foregoing method may be implemented by software, hardware, or hardware executing corresponding software.

In a possible implementation, the apparatus includes a communication unit, where the communication unit is configured to send a first message to a terminal, where the first message includes positioning configuration information, and the first message is at least one of the following messages: a select message, a paging message, a query message, a random access response, a beacon (Beacon), a system message, a synchronization message, a location sequence, and an excitation message; and the communication unit is further configured to receive at least one positioning signal from the terminal based on the positioning configuration information.

Optionally, the communication unit is further configured to receive a first service request and a location service request, where the first service request is used to request to perform a first service, and the location service request is used to request to perform a location service.

Optionally, the first service includes at least one of the following services: a paging service, an inventory service, and a sensing service.

Optionally, the first service request and the location service request are included in a same message.

Optionally, the positioning configuration information is from a location management network element, and the positioning configuration information includes at least one of the following information: a sending periodicity of the positioning signal, a quantity of times of sending the positioning signal, a positioning signal type, a sending time period of the positioning signal, a sending time offset value of the positioning signal, a sending frequency of the positioning signal, and an absolute time point for sending the positioning signal.

Optionally, the positioning signal includes at least one of the following: a location sequence, a 16-bit random number, an electronic factory code EPC, uplink data, a random access request, and a user identifier.

Optionally, if the first service is an inventory service, the EPC or the user identifier is used to perform inventory on the terminal.

Optionally, the apparatus further includes a processing unit, where the processing unit is further configured to measure the at least one positioning signal to obtain a measurement result; and the communication unit is further configured to send the measurement result.

Optionally, the communication unit is further configured to send a stop indication to the terminal, where the stop indication indicates to stop sending the positioning signal.

According to a tenth aspect, a communication apparatus is provided. The communication apparatus may implement the method in the third aspect. For example, the communication apparatus may be an AMF or a chip in the AMF. The foregoing method may be implemented by software, hardware, or hardware executing corresponding software.

In a possible implementation, the apparatus includes a communication unit and a processing unit, where the communication unit is configured to send first indication information to a location management network element, where the first indication information indicates that a location service is associated with a first service; the communication unit is further configured to receive a location service request from the location management network element, where the location service request is used to request to perform the location service, and the location service request includes the first indication information; the communication unit is further configured to send a first service request and the location service request to an access network device based on the first indication information, where the first service request is used to request to perform the first service; and the communication unit is further configured to receive a positioning result from the location management network element.

Optionally, the first indication information is a service association identifier, or indication information including a field.

Optionally, the first service includes at least one of the following services: a paging service, an inventory service, and a sensing service.

Optionally, the positioning result is determined based on a measurement result sent by the access network device after the access network device performs measurement.

Optionally, the first service request and the positioning request are in a same message.

Optionally, the location service request further includes positioning configuration information, where the positioning configuration information includes at least one of the following information: a sending periodicity of a positioning signal, a quantity of times of sending the positioning signal, a positioning signal type, a sending time period of the positioning signal, a sending time offset value of the positioning signal, a sending frequency of the positioning signal, and an absolute time point for sending the positioning signal; and the positioning signal type includes at least one of the following: a location sequence, a 16-bit random number, an electronic factory code EPC, uplink data, a random access request, and a user identifier.

Optionally, if the first service is an inventory service, the EPC or the user identifier is used to perform inventory on at least one terminal.

According to an eleventh aspect, a communication apparatus is provided. The communication apparatus may implement the method in the fourth aspect. For example, the communication apparatus may be an LMF or a chip in the LMF. The foregoing method may be implemented by software, hardware, or hardware executing corresponding software.

In a possible implementation, the apparatus includes a communication unit, where the communication unit is configured to receive first indication information from an access and mobility management network element, where the first indication information indicates that positioning is associated with a first service; the communication unit is further configured to send a location service request to the access and mobility management network element, where the location service request is used to request to perform a location service, and the location service request includes the first indication information; and the communication unit is further configured to receive a measurement result, where the measurement result is obtained by measuring at least one positioning signal received from a terminal.

Optionally, the first service includes at least one of the following services: a paging service, an inventory service, and a sensing service.

Optionally, the apparatus further includes a processing unit. The processing unit is configured to generate a positioning result based on the measurement result. The communication unit is further configured to send the positioning result to the access and mobility management network element.

Optionally, the location service request further includes positioning configuration information, where the positioning configuration information includes at least one of the following information: a sending periodicity of the positioning signal, a quantity of times of sending the positioning signal, a positioning signal type, a sending time period of the positioning signal, a sending time offset value of the positioning signal, a sending frequency of the positioning signal, and an absolute time point for sending the positioning signal; and the positioning signal type includes at least one of the following: a location sequence, a 16-bit random number, an electronic factory code EPC, uplink data, a random access request, and a user identifier.

According to a twelfth aspect, a communication apparatus is provided. The communication apparatus may implement the method in the fifth aspect. For example, the communication apparatus may be an LMF or a chip in the LMF. The foregoing method may be implemented by software, hardware, or hardware executing corresponding software.

In a possible implementation, the apparatus includes a communication unit and a processing unit, where the communication unit is configured to receive a location service request from an access and mobility management network element, where the location service request is used to request to perform a location service, or a location service and a first service on a terminal; and the communication unit is further configured to send a first service and location service request to an access network device, where the first service and location service request is used to request to perform the location service, or the location service and the first service on the terminal, and the first service and location service request includes positioning configuration information.

Optionally, the first service includes at least one of the following services: a paging service, an inventory service, and a sensing service.

Optionally, the first service and location service request includes indication information, where the indication information indicates that the first service is associated with the location service.

Optionally, the indication information is a service association identifier.

Optionally, the positioning configuration information includes at least one of the following information: a sending periodicity of a positioning signal, a quantity of times of sending the positioning signal, a positioning signal type, a sending time period of the positioning signal, a sending time offset value of the positioning signal, a sending frequency of the positioning signal, and an absolute time point for sending the positioning signal; and the positioning signal type includes at least one of the following: a location sequence, a 16-bit random number, an electronic factory code EPC, uplink data, a random access request, and a user identifier.

Optionally, the communication unit is further configured to receive a first service and location service response from the access network device, where the first service and location service response includes a first service result, a measurement result, and the service association identifier, and the measurement result is obtained by the access network device by measuring at least one positioning signal received from the terminal; and the communication unit is further configured to send a location service response to the access and mobility management network element, where the location service response includes the first service result and a positioning result.

Optionally, the first service and location service response includes identifiers of a plurality of access network devices and a plurality of measurement results corresponding to the identifiers of the plurality of access network devices; and the location service response includes identifiers of a plurality of access network devices and one positioning result corresponding to the identifiers of the plurality of access network devices; or the location service response includes identifiers of a plurality of access network devices and a plurality of positioning results corresponding to the identifiers of the plurality of access network devices.

Optionally, if the first service is an inventory service, the first service and positioning response include a plurality of EPCs and a plurality of measurement results corresponding to the plurality of EPCs; or the location service response includes a plurality of EPCs and a plurality of positioning results corresponding to the plurality of EPCs.

According to a thirteenth aspect, a communication apparatus is provided. The communication apparatus may implement the method in the sixth aspect. For example, the communication apparatus may be an AMF or a chip in the AMF. The foregoing method may be implemented by software, hardware, or hardware executing corresponding software.

In a possible implementation, the apparatus includes a communication unit and a processing unit, where the processing unit is configured to determine to trigger a location service, or a first service and a location service; and the communication unit is configured to send a first service and location service request to an access network device, where the first service and location service request is used to request to perform the location service, or the location service and the first service, and the first service and location service request includes positioning configuration information.

Optionally, the first service includes at least one of the following services: a paging service, an inventory service, and a sensing service.

Optionally, the first service and location service request include indication information, where the indication information is a service association identifier.

Optionally, the communication unit is further configured to send a location service request to a location management network element, where the location service request is used to request to perform the location service, or the location service and the first service on a terminal; and the communication unit is further configured to receive a location service response from the location management network element, where the location service response indicates that the access network device has a capability of performing the location service.

Optionally, the communication unit is further configured to receive a first service and location service response from the access network device, where the first service and location service response includes a first service result, a measurement result, and the service association identifier, and the measurement result is obtained by the access network device by measuring at least one positioning signal received from the terminal; the communication unit is further configured to send a positioning calculation request to the location management network element, where the positioning calculation request includes the measurement result; and the communication unit is further configured to receive a positioning calculation response from the location management network element, where the positioning calculation response includes a positioning result, and the positioning result is determined based on the measurement result.

Optionally, the first service and location service response includes measurement results from a plurality of access network devices; the positioning calculation request includes identifiers of the plurality of access network devices and the plurality of measurement results corresponding to the identifiers of the plurality of access network devices; and the positioning calculation response includes the identifiers of the plurality of access network devices and one positioning result corresponding to the identifiers of the plurality of access network devices, or the positioning calculation response includes the identifiers of the plurality of access network devices and a plurality of positioning results corresponding to the identifiers of the plurality of access network devices.

Optionally, if the first service is an inventory service, the first service and location service response includes a plurality of EPCs from a plurality of access network devices; the positioning calculation request includes a plurality of EPCs and a plurality of measurement results corresponding to the plurality of EPCs; and the positioning calculation response includes a plurality of EPCs and a plurality of positioning results corresponding to the plurality of EPCs.

Optionally, the positioning configuration information includes at least one of the following information: a sending periodicity of the positioning signal, a quantity of times of sending the positioning signal, a positioning signal type, a sending time period of the positioning signal, a sending time offset value of the positioning signal, a sending frequency of the positioning signal, and an absolute time point for sending the positioning signal; and the positioning signal type includes at least one of the following: a location sequence, a 16-bit random number, an EPC, uplink data, a random access request, and a user identifier.

According to a fourteenth aspect, a communication apparatus is provided. The communication apparatus may implement the method in the seventh aspect. For example, the communication apparatus may be an LMF or a chip in the LMF. The foregoing method may be implemented by software, hardware, or hardware executing corresponding software.

In a possible implementation, the apparatus includes a communication unit and a processing unit, where the communication unit is configured to receive a location service request from an access and mobility management network element, where the location service request is used to request to perform a location service, or a location service and a first service on a terminal; the communication unit is further configured to receive a measurement result, where the measurement result is obtained by an access network device by measuring at least one positioning signal received from the terminal; and the communication unit is further configured to send a positioning result, where the positioning result is determined based on the measurement result.

Optionally, the first service includes at least one of the following services: a paging service, an inventory service, and a sensing service.

Optionally, the communication unit is further configured to send a location service response to the access and mobility management network element based on the location service request, where the location service response indicates that the access network device has a capability of performing the location service.

Optionally, the communication unit is further configured to receive a positioning calculation request from the access and mobility management network element, where the positioning calculation request includes the measurement result; or the communication unit is further configured to receive the measurement result from the access network device.

Optionally, the positioning calculation request includes identifiers of a plurality of access network devices and measurement results corresponding to the identifiers of the plurality of access network devices; and the positioning calculation response includes the identifiers of the plurality of access network devices and one positioning result corresponding to the identifiers of the plurality of access network devices, or the positioning calculation response includes the identifiers of the plurality of access network devices and a plurality of positioning results corresponding to the identifiers of the plurality of access network devices.

Optionally, if the first service is an inventory service, the positioning calculation request includes a plurality of EPCs and measurement results corresponding to the plurality of EPCs; and the positioning calculation response includes a plurality of EPCs and a plurality of positioning results corresponding to the plurality of EPCs.

With reference to any one of the eighth aspect to the fourteenth aspect, in another possible implementation, the communication apparatus includes a processor coupled to a memory, and the processor is configured to support the apparatus in performing a corresponding function in the foregoing communication method. The memory is configured to be coupled to the processor, and the memory stores a computer program (or computer-executable instructions) and/or data required for the apparatus. Optionally, the communication apparatus may further include a communication interface, configured to support communication between the apparatus and another network element, for example, sending or receiving of data and/or a signal. For example, the communication interface may be a transceiver, a circuit, a bus, a module, or another type of communication interface. Optionally, the memory may be located inside the communication apparatus and integrated with the processor, or may be located outside the communication apparatus.

With reference to any one of the eighth aspect to the fourteenth aspect, in still another possible implementation, the communication apparatus includes a processor and a transceiver apparatus. The processor is coupled to the transceiver apparatus. The processor is configured to execute a computer program or instructions to control the transceiver apparatus to receive and send information. When the processor executes the computer program or the instructions, the processor is further configured to implement the foregoing method by using a logic circuit or by executing code instructions. The transceiver apparatus may be a transceiver, a transceiver circuit, an interface circuit, or an input/output interface, and is configured to: receive a signal from a communication apparatus other than the communication apparatus and transmit the signal to the processor, or transmit a signal from the processor to a communication apparatus other than the communication apparatus. When the communication apparatus is a chip, the transceiver apparatus is a transceiver circuit or an input/output interface.

When the communication apparatus is a chip, a sending unit may be an output unit, for example, an output circuit or a communication interface; and a receiving unit may be an input unit, for example, an input circuit or a communication interface. When the communication apparatus is a terminal, a sending unit may be a transmitter or a transmitter machine; and a receiving unit may be a receiver or a receiver machine.

According to a fifteenth aspect, a communication system is provided. The communication system includes the communication apparatus according to the eighth aspect to the communication apparatus according to the eleventh aspect.

According to a sixteenth aspect, a communication system is provided. The communication system includes the communication apparatus according to the eighth aspect, the communication apparatus according to the ninth aspect, and the communication apparatus according to the twelfth aspect.

According to a seventeenth aspect, a communication system is provided. The communication system includes the communication apparatus according to the eighth aspect, the communication apparatus according to the ninth aspect, the communication apparatus according to the thirteenth aspect, and the communication apparatus according to the fourteenth aspect.

According to an eighteenth aspect, a computer-readable storage medium is provided. The computer-readable storage medium stores a computer program or instructions. When the program or instructions are executed by a processor, the method according to any one of the first aspect to the seventh aspect or the implementations of the first aspect to the seventh aspect is performed.

According to a nineteenth aspect, a computer program product is provided. When the computer program product is executed on a computing device, the method according to any one of the first aspect to the seventh aspect or the implementations of the first aspect to the seventh aspect is performed.

According to a twentieth aspect, a circuit is provided. The circuit is coupled to a memory, and the circuit is configured to perform the method according to any one of the first aspect to the seventh aspect or the implementations of the first aspect to the seventh aspect is performed. The circuit may include a chip circuit.

### BRIEF DESCRIPTION OF DRAWINGS

FIG. 1 is a diagram of an architecture of a communication system to which an embodiment of this application is applied;
FIG. 2a is a diagram of a structure of an RFID system according to an embodiment of this application;
FIG. 2b is a diagram of a structure of another RFID system according to an embodiment of this application;
FIG. 2c is a diagram of a structure of still another RFID system according to an embodiment of this application;
FIG. 3a is a diagram of a structure of an RFID system with a separated architecture according to an embodiment of this application;
FIG. 3b is a diagram of a structure of another RFID system with a separated architecture according to an embodiment of this application;
FIG. 3c is a diagram of a structure of still another RFID system with a separated architecture according to an embodiment of this application;
FIG. 3d is a diagram of a structure of still another RFID system with a separated architecture according to an embodiment of this application;
FIG. 4 is a diagram of an RFID operating procedure according to an embodiment of this application;
FIG. 5 is a diagram of a structure of a 5G positioning system according to an embodiment of this application;
FIG. 6 is a schematic flowchart of a communication method according to an embodiment of this application;
FIG. 7 is a schematic flowchart of another communication method according to an embodiment of this application;
FIG. 8 is a schematic flowchart of still another communication method according to an embodiment of this application;
FIG. 9 is a schematic flowchart of still another communication method according to an embodiment of this application;
FIG. 10 is a schematic flowchart of still another communication method according to an embodiment of this application;
FIG. 11 is a schematic flowchart of still another communication method according to an embodiment of this application;
FIG. 12 is a schematic flowchart of still another communication method according to an embodiment of this application;
FIG. 13 is a schematic flowchart of still another communication method according to an embodiment of this application;
FIG. 14 is a schematic flowchart of still another communication method according to an embodiment of this application;
FIG. 15 is a schematic flowchart of still another communication method according to an embodiment of this application;
FIG. 16 is a schematic flowchart of still another communication method according to an embodiment of this application;
FIG. 17 is a schematic flowchart of still another communication method according to an embodiment of this application;
FIG. 18 is a diagram of a structure of a communication apparatus according to an embodiment of this application; and
FIG. 19 is a diagram of a structure of another communication apparatus according to an embodiment of this application.

### DESCRIPTION OF EMBODIMENTS

The following describes embodiments of this application with reference to the accompanying drawings in embodiments of this application.

Embodiments of this application may be applied to various communication systems, for example, LTE time division duplex (time division duplex, TDD) of a long term evolution (long term evolution, LTE) system, a 5th generation (5th generation, 5G) communication system, and a future 6th generation (6th generation, 6G) communication system.

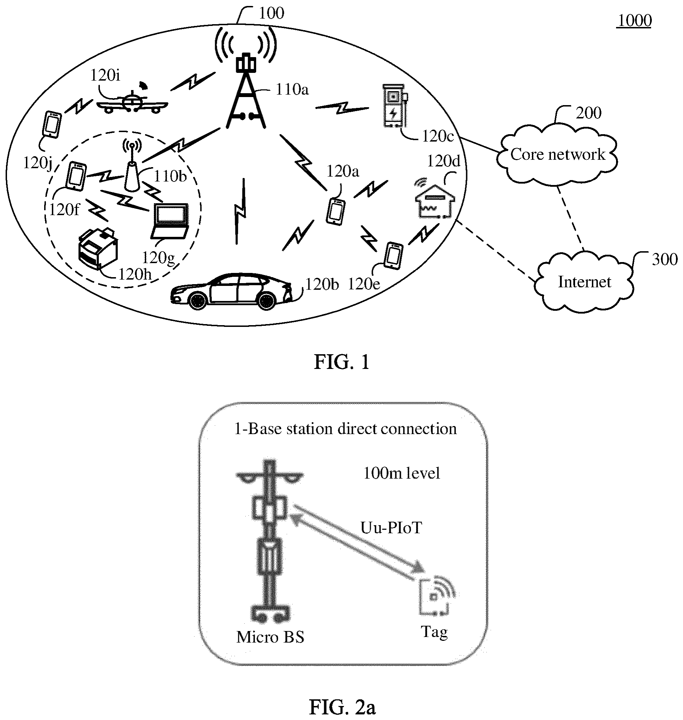

FIG. 1 is a diagram of an architecture of a communication system to which an embodiment of this application is applied. As shown in FIG. 1, the communication system 1000 includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. Terminals may be connected to each other in a wired or wireless manner, and radio access network devices may be connected to each other in a wired or wireless manner. FIG. 1 is merely a diagram. The communication system may further include another network device, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or unit that completes some functions of a base station, for example, may be a central unit (central unit, CU), or may be a distributed unit (distributed unit, DU). The radio access network device may be a macro base station (for example, 110a in FIG. 1), may be a micro base station or an indoor base station (for example, 110b in FIG. 1), or may be a relay node or a donor node. A specific technology and a specific device form that are used for the radio access network device are not limited in embodiments of this application. For ease of description, an example in which a base station is used as a radio access network device is used below for description.

The terminal may also be referred to as a terminal device, a user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), an internet of things (internet of things, IoT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used for the terminal are not limited in embodiments of this application.

The base station and the terminal may be fixed or movable. The base station and the terminal may be deployed on land, where the deployment includes indoor or outdoor, or handheld or vehicle-mounted deployment; may be deployed on water; or may be deployed on an airplane, a balloon, and a satellite in air. Application scenarios of the base station and the terminal are not limited in embodiments of this application.

Roles of the base station and the terminal may be relative. For example, the helicopter or uncrewed aerial vehicle 120i in FIG. 1 may be configured as a mobile base station. For those terminals 120j accessing the radio access network 100 through 120i, the terminal 120i is a base station. However, for the base station 110a, 120i is a terminal. In other words, communication between 110a and 120i is performed according to a radio air interface protocol. Certainly, communication between 110a and 120i may alternatively be performed according to an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between the base station and the terminal, between base stations, or between terminals may be performed by using a licensed spectrum, may be performed by using an unlicensed spectrum, or may be performed by using both a licensed spectrum and an unlicensed spectrum. Communication may be performed by using a spectrum below 6 gigahertz (gigahertz, GHz), may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A function of the terminal may be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal establishes a wireless connection to a cell controlled by the base station. The cell that establishes the wireless connection to the terminal is referred to as a serving cell of the terminal. When communicating with the serving cell, the terminal is further interfered by a signal from a neighboring cell.

In embodiments of this application, a time domain symbol may be an orthogonal frequency division multiplexing (orthogonal frequency division multiplexing, OFDM) symbol, or may be a discrete Fourier transform-spread-orthogonal frequency division multiplexing (Discrete Fourier Transform-spread-OFDM, DFT-s-OFDM) symbol. Unless otherwise specified, all symbols in embodiments of this application are time domain symbols.

It may be understood that, in embodiments of this application, a physical downlink shared channel (physical downlink shared channel, PDSCH), a physical downlink control channel (physical downlink control channel, PDCCH), and a physical uplink shared channel (physical uplink shared channel, PUSCH) are merely examples of a downlink data channel, a downlink control channel, and an uplink data channel respectively. In different systems and different scenarios, a data channel and a control channel may have different names. This is not limited in embodiments of this application.

Core network elements in embodiments of this application include an AMF, an LMF, and the like.

AMF entity: It is mainly responsible for signaling processing, for example, functions such as access control, mobility management, attach and detach, and gateway selection. When the AMF entity provides a service for a session in a terminal, the AMF entity provides a storage resource of a control plane for the session, to store a session identifier, an SMF entity identifier associated with the session identifier, and the like.

LMF entity: It receives and processes a positioning request or a positioning-related data request from the AMF; sends a positioning result or related positioning data to the AMF; selects a positioning method, which may be a single positioning method or a hybrid positioning method; controls related positioning measurement based on different positioning methods; calculates positioning assistance data and delivers the data to a UE, where in an E-CID positioning method, the LMF does not need additional positioning assistance data calculation; and calculates location information and estimates positioning accuracy.

It should be noted that the foregoing functional entities are only names, and the names do not constitute a limitation on the entities. For example, the access and mobility management function entity may alternatively be replaced with an "access and mobility management function" or another name. The access and mobility management function entity may alternatively correspond to an entity that includes another function in addition to an access and mobility management function. The location management function entity may alternatively be replaced with a "location management function" or another name. The location management function entity may alternatively correspond to an entity that includes another function in addition to a location management function. Unified descriptions are provided herein. Details are not described below again.

An application scenario of embodiments of this application is an ambient internet of things (ambient IoT). The ambient internet of things is based on a cellular network communication infrastructure, includes a reader and a passive/semi-passive/active tag (tag), and its main services include inventory, positioning, sensing reporting, and the like. Typical application scenarios include logistics, warehousing, industrial manufacturing, identity identification, and environmental monitoring.

A typical tag-related technology is a radio frequency identification (radio frequency identification, RFID) technology. An RFID system usually includes a reader (interrogator) and a tag. The reader may exchange information with the tag, to manage the tag. The reader reads information in the tag; or writes, into the tag, information that needs to be stored in the tag. Non-contact data communication is performed between the reader and the tag. The tag has a simple function, and needs excitation of the reader to send information. To be specific, the tag converts a wireless signal sent by the reader into energy, and uses the energy to drive the tag to operate. The tag supports microwatt-level or 100 microwatt-level power consumption, but does not support a complex design.

If RFID is applied to a mobile communication system, for example, applied to a 5G system, a base station may serve as a reader to implement a function of the reader. The solutions in embodiments of this application may be applied to a 5G NR system. The solutions in embodiments of this application may also be applied to another communication system, and a new network may be named as an ambient internet of things or a passive internet of things (passive IoT).

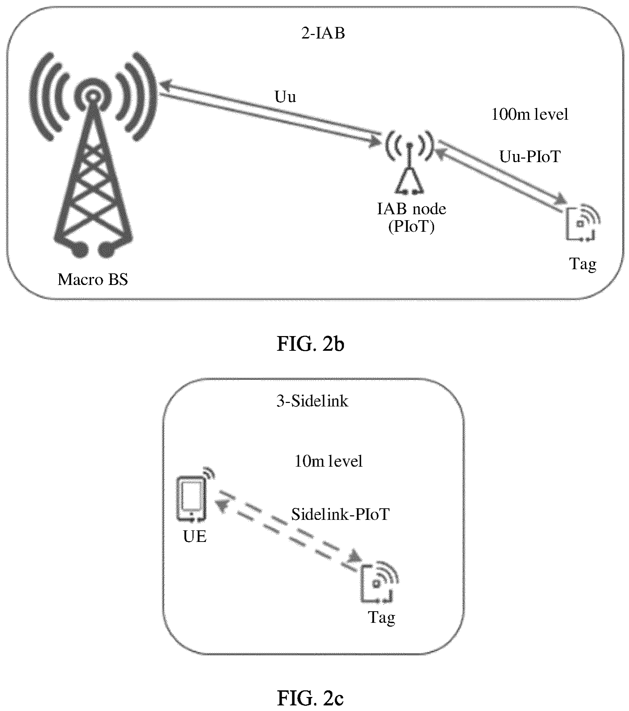

The tag may be located within a coverage area provided by the reader. FIG. 2a is a diagram of a structure of an RFID system according to an embodiment of this application. When a base station is used as a reader or a base station performs a reader function, the base station is connected to a tag through Uu, in other words, air interface communication is implemented. For example, the base station may be a micro base station (Micro BS), and the reader may provide a 100m level (100m level) coverage area. FIG. 2b is a diagram of a structure of another RFID system according to an embodiment of this application. A reader may be connected to an integrated access and backhaul (integrated access and backhaul, IAB) node (Node) through Uu. The IAB node is connected to a base station through Uu, and the IAB node may provide a 100 m level coverage area. For example, the base station may be a macro base station (Macro BS). FIG. 2c is a diagram of a structure of still another RFID system according to an embodiment of this application. A tag is connected to a terminal through a sidelink (sidelink), and the terminal may provide a 10m level (10m level) coverage area.

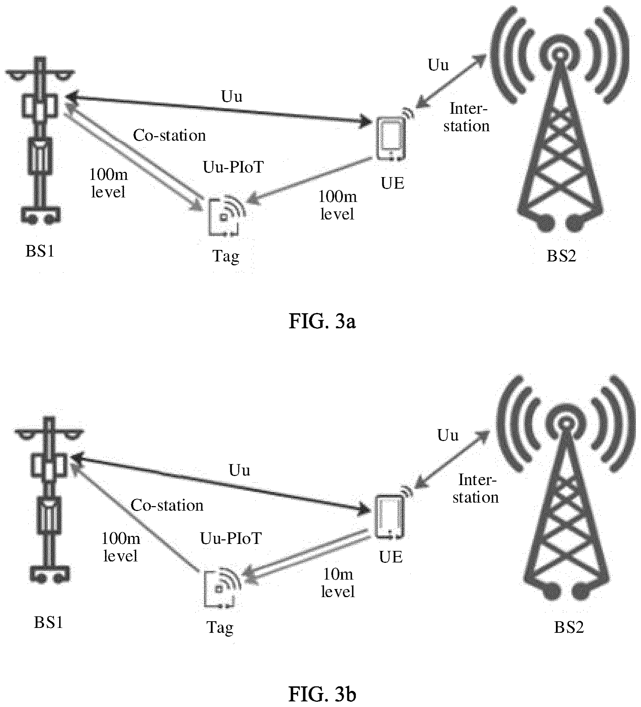

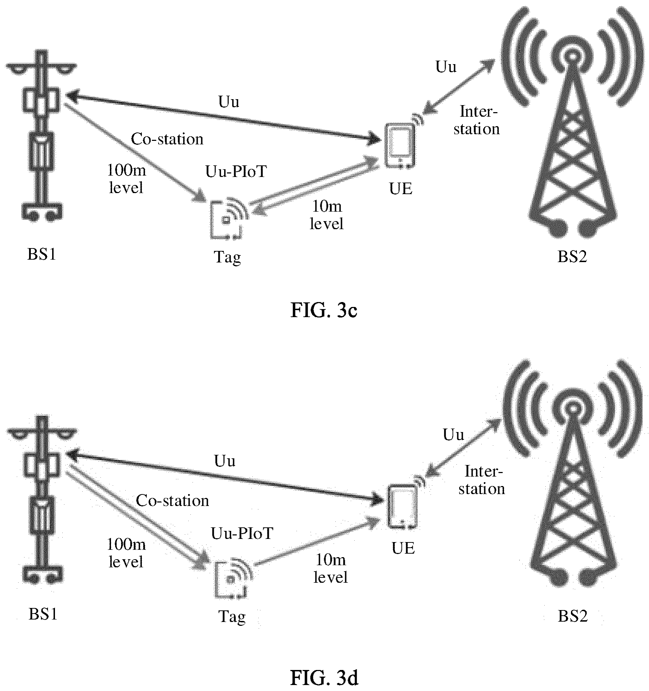

In addition, an embodiment of this application further provides an RFID system with a separated architecture (that is, uplink and downlink decoupling). FIG. 3a is a diagram of a structure of an RFID system with a separated architecture according to an embodiment of this application. A tag and a reader (for example, a BS1) have only an uplink connection, and the tag and an excitation source (helper) (namely, a UE) have only a downlink connection. The BS1 provides a carrier wave (carrier wave). FIG. 3b is a diagram of a structure of another RFID system with a separated architecture according to an embodiment of this application. A tag and a reader (for example, a BS1) have only an uplink connection, and the tag and an excitation source (namely, a UE) have only a downlink connection. The UE provides a carrier wave. FIG. 3c is a diagram of a structure of still another RFID system with a separated architecture according to an embodiment of this application. A tag and an excitation source (for example, a BS1) have only a downlink connection, and the tag and a reader (namely, a UE) have only an uplink connection. The UE provides a carrier wave. FIG. 3d is a diagram of a structure of still another RFID system with a separated architecture according to an embodiment of this application. A tag and an excitation source (for example, a BS1) have only a downlink connection, and the tag and a reader (namely, a UE) have only an uplink connection. The BS1 provides a carrier wave. In FIG. 3a to FIG. 3d, both the tag and the UE are located in a coverage area of the BS1, and the UE may further communicate with a BS2 through a Uu connection. The BS2 is a base station different from the BS1 (the BS 1 is a serving base station of the UE, and the BS2 is a different base station). For example, the BS1 is a micro base station, and the BS2 is a macro base station.

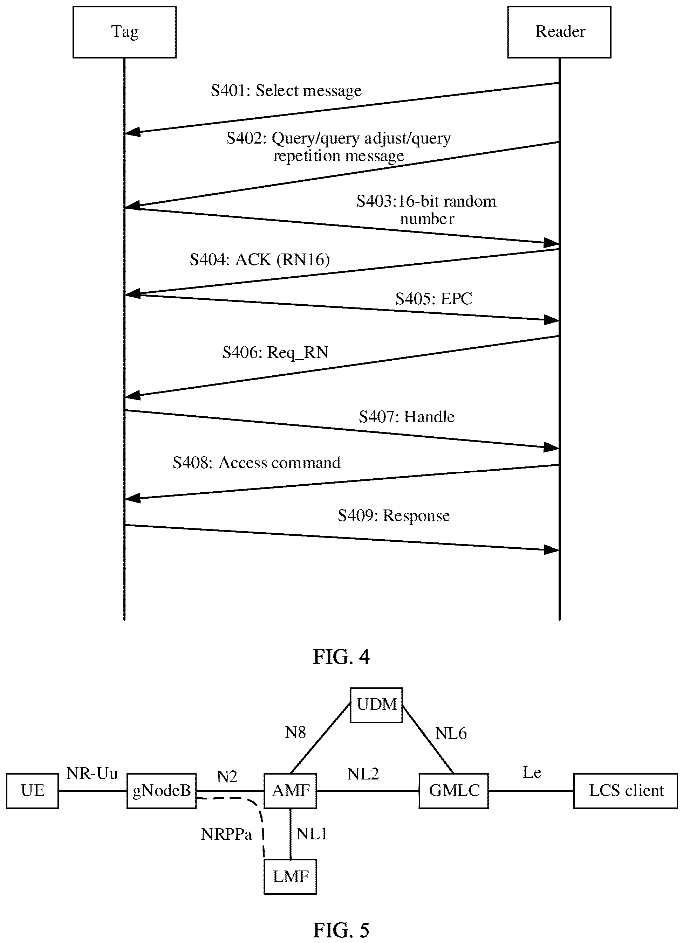

FIG. 4 is a diagram of an RFID operating procedure according to an embodiment of this application. For example, the procedure may be used for performing inventory on a tagged item. The procedure may include the following steps.

S401: A reader sends a select (Select) message to a tag, where the Select command triggers an inventory procedure, and allows the reader to select a specific tag group before inventory, perform inventory on one group of tags, set a flag bit for the tag, and the like.

S402: The reader sends a query (Query)/query adjust (QueryAdjust)/query repetition (QueryRep) message to the tag. The Query contains a parameter Q that is counted by slots. When a selected tag receives a Query, the tag selects a 16-bit random number (RN16) in a range (0, 2^{Q}-1) and loads the value to a slot counter of the tag. The random number is used as an initial value of the slot counter. A tag that selects zero switches to a reply (reply) state and responds immediately. A tag that selects a non-zero value switches to an arbitrate (arbitrate) state and waits for a QueryAdjust or QueryRep command. The QueryAdjust or QueryRep command is used to update a random number, and a next step is triggered only when the random number is reduced to 0, so as to avoid a conflict between tags and improve reliability of random access.

S403: If a slot counter generated by the tag is 0, the tag feeds back an RN16; otherwise, the tag provides no feedback.

S404: The reader sends a response (acknowledgement, ACK) to the tag, where the response includes the same RN16.

S405: The tag compares the RN 16 fed back by the tag with the RN 16 sent by the reader in step S404. If the two RN 16 match, the tag feeds back an electronic product code (electronic product code, EPC) (or referred to as an electronic factory code); otherwise, the tag provides no feedback.

S406: The reader sends a Req_RN (Request RN16, for requesting the tag to regenerate a new RN16) to the tag, where the Req_RN includes the foregoing RN16.

S407: The tag compares the RN16 fed back by the tag with the RN16 sent by the reader in step S406. If the Req_RN includes an RN16 that matches the tag and a 16-bit cyclic redundancy check (cyclic redundancy check, CRC-16, for checking integrity of a data packet), the tag needs to feed back and store a new RN16 (denoted as handle), and jumps to an open or secured state. If the RN16 does not match the tag, the tag provides no feedback.

S408: The reader sends, to the tag, an access command (command) including the handle.

S409: The tag verifies the handle. If the verification succeeds, the tag responds; otherwise, the tag feeds back an error code.

The RFID tag is easily implemented and does not support complex measurement. Therefore, a tag design solution needs to comply with a simplification principle. A workflow that is not based on complex measurement is extremely important for wide application of the passive IoT in cellular networks.

Embodiments of this application further relate to positioning. First, a 5G positioning technology is described as follows:

In the 5G positioning technology, some parameters of a radio signal are measured, and a location of a terminal is determined based on a specific positioning technology. The measurement parameters usually include transmission duration of a radio wave, a signal strength, an angle of arrival, an angle of departure, and the like.

FIG. 5 is a diagram of a structure of a 5G positioning system according to an embodiment of this application. 5G positioning is implemented through cooperation among a terminal, a 5G access network, an AMF, an LMF, a unified data management (unified data management, UDM) network element, a gateway mobile location center (gateway mobile location center, GMLC), and a location service client (location service client, LCS Client) network element.

In the 5G positioning technology, functions of the network elements are as follows:

Terminal: It terminates a long term evolution positioning protocol (LTE positioning protocol, LPP) and completes interaction of positioning-related processes; it supports reporting of terminal positioning capability information to the LMF; it reports a positioning measurement result to the LMF in a terminal-assisted or LMF-based mode; and it reports a positioning calculation result to the LMF in a terminal-based mode.

5G access network: A base station mainly performs the following functions as required by the LMF: terminating a new radio positioning protocol A (NR positioning protocol A, NRPPa) over an N2 interface and receiving or sending NRPPa-related positioning messages; and completing positioning-related measurement and reporting a measurement quantity to the LMF. For example, when an uplink E-CID positioning method is used, the base station reports information required for positioning, including a synchronization signal reference signal received power (synchronization signal reference signal received power, SS-RSRP) and synchronization signal reference signal received quality (synchronization signal reference signal received quality, SS-RSRQ) of a serving cell and a neighboring cell.

AMF: It supports reception of a positioning request (which is initiated by the UE/GMLC/AMF) and management of the positioning request; supports LMF selection; supports an implementation of NRPPa and positioning-related interaction with the base station; and transparently transmits related positioning messages between the LMF, the base station, the UE, and other entities.

LMF: It receives and processes a positioning request or a positioning-related data request from the AMF; sends a positioning result or related positioning data to the AMF; selects a positioning method, which may be a single positioning method or a hybrid positioning method; controls related positioning measurement based on different positioning methods; calculates positioning assistance data and delivers the data to the UE, where in an E-CID positioning method, the LMF does not need additional positioning assistance data calculation; and calculates location information and estimates positioning accuracy.

UDM: It stores positioning subscription information and routing information of a user.

GMLC: It completes processing for a location request of an LCS client for the UE, to be specific, obtains longitude and latitude information of the user and sends the information to the LCS client. As an operation platform of a location service system, the GMLC implements functions such as subscriber data management, service data management, service subscription information management, service provider (service provider, SP) data management and charging, and authentication and authorization of value-added service applications.

LCS client: It is a logical functional entity, and may be an entity in a public land mobile network (public land mobile network, PLMN), for example, an O&M tool; or an entity outside a PLMN, for example, a third-party positioning server that is not deployed by an operator. The LCS client sends a positioning request carrying quality of service (quality of service, QoS) and another parameter, to request to obtain location information of one or more UEs.

The 5G positioning system relates to the following positioning protocols:

NRPPa is a positioning protocol terminated between the base station and the LMF. The base station and the LMF exchange positioning information according to the NRPPa positioning protocol.

An LTE positioning protocol is directly used in LPP, and LPP is a positioning protocol terminated between the UE and the LMF. The LMF and the UE exchange positioning information according to the LPP positioning protocol. The LMF and the UE interact with each other by using a non-access stratum (non-access stratum, NAS) message, and the exchanged message is transparent to the base station.

A location service request may be initiated by different network element modules, for example, the UE or the AMF, or indirectly initiated by the GMLC (for example, the GMLC processes a location service request initiated by the LCS client). A specific positioning procedure is as follows:
(1) When a location service request is initiated by the AMF (the AMF determines to enable location services for some UEs), a next step is directly performed. When a location service is initiated by the UE, a location service request is sent to the gNodeB over an NR-Uu interface, and the gNodeB sends the location service request to the AMF over the N2 interface. When a location service request is initiated by the LCS client, the location service request is sent to the GMLC over a Le interface, and the GMLC sends the location service request to the AMF over an NL2 interface.
(2) The AMF sends the location service request to the LMF over an NL1 interface.
(3) After receiving the location service request, the LMF sends positioning assistance data to the UE over the NL1, N2, and NR-Uu interfaces, queries a related measurement quantity from the UE or the gNodeB, and finally obtains a positioning result of the UE through calculation.
(4) The LMF returns the positioning result to the AMF over the NL1 interface. If a positioning function initiator is the AMF, the procedure ends; otherwise, a next step is performed.
(5) The AMF transfers the positioning result to the initiating entity, namely, the UE or the GMLC. When the LCS client initiates the location service request, the GMLC sends calculated location information to the LCS client that initiates the positioning request.

An involved specific positioning technology may be uplink angle of arrival (uplink angle of arrival, UL-AoA)-based positioning. The UL-AoA is an angle-based positioning method. In angle-based positioning, a problem of clock synchronization between base stations and between a base station and a UE does not need to be considered. Specifically, the base station calculates location information of the UE by measuring an angle of arrival of an uplink signal of the UE.

The UL-AoA positioning does not depend on synchronization accuracy between base stations. A larger quantity of antenna arrays indicates more accurate angle measurement and higher positioning accuracy. However, this method is usually affected by non-line-of-sight transmission of radio signals caused by multiple paths and other environmental factors. In addition, when a mobile device is far away from the base station, a small deviation of a positioning angle causes a large deviation of a positioning distance.

In an ambient IoT, a main positioning method currently considered is UL-AOA-based positioning. Certainly, using of the UL-AOA positioning method is not limited in embodiments of this application. In other words, a measurement quantity of an uplink signal is not limited, and may be other information such as an angle, a signal strength, and arrival of time.

The foregoing describes the RFID technology and the 5G positioning technology. However, a low-capability terminal does not support a complex design, and signaling exchanging cannot be designed to be too complex. For example, a tag can perform an inventory service only through an inventory procedure and cannot support a complex positioning procedure. If an AMF and an LMF respectively initiate an inventory request and a positioning request, the two requests cannot be aligned on a base station side. For example, after receiving the inventory request of the AMF, a base station immediately triggers the inventory procedure, and does not sense the positioning request of the LMF. The base station may receive the positioning request of the LMF only after the inventory ends. A complex positioning signal configuration is also not applicable to the A-IoT. For example, a positioning signal configuration requires separate signaling exchanging, and a tag may not be suitable for excessively complex signaling exchanging.

In addition, the RFID is an independent system, without participation of a core network, and supports a service bearer of a private network. To apply RFID extension to a cellular network, an end-to-end procedure is required. Introduction of the core network may facilitate implementations of some services, for example, location management. Currently, there is no procedure design for a core network to trigger tag service inventory and location in a scenario in which a tag is connected to a base station.

In view of this, embodiments of this application provide a communication solution. An AMF or an LMF triggers a location service and a first service, or a location service. When receiving a location service request and a first service request, or a location service request, an access network side sends a first message to a low-capability terminal, where existing signaling between the low-capability terminal and the access network side may be reused as the first message, and the first message includes positioning configuration information; and the low-capability terminal sends a positioning signal to the access network side based on the positioning configuration information, to position the low-capability terminal.

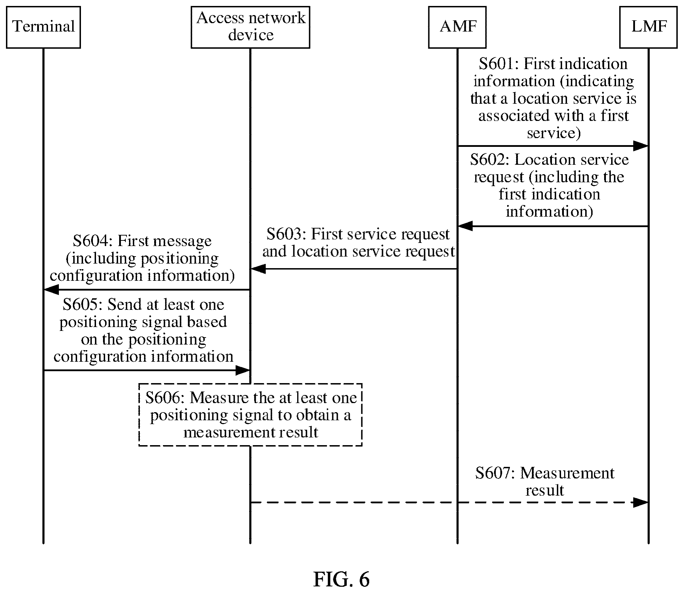

FIG. 6 is a schematic flowchart of a communication method according to an embodiment of this application. This embodiment relates to positioning of a low-capability terminal. The low-capability terminal is a terminal whose processing capability, communication capability, and power consumption are lower than those of a common terminal. The low-capability terminal may be, for example, a tag. The tag may be a passive/semi-passive/active tag. The tag does not support a complex design, and does not support a complex signaling procedure. For example, the method may include the following steps.

S601: An AMF sends first indication information to an LMF.

The first indication information indicates that a location service is associated with a first service.

In this embodiment, when the AMF receives a first service request and a location service request from a terminal or an external network (for example, the foregoing LCS client or A-IoT private network element), or when the AMF initiates the first service and the location service, the AMF sends the first indication information to the LMF. The first indication information indicates that the location service is associated with the first service, indicates that a triggered positioning procedure includes the first service, or indicates that a triggered first service procedure includes the location service. For example, the first service includes at least one of the following services: a paging service, an inventory service, and a sensing service.

In this embodiment, the AMF and the LMF are merely names, and the names do not constitute a limitation on the entities. For example, the access and mobility management function entity may alternatively be replaced with an "access and mobility management function", a "first core network device", or another name. The access and mobility management function entity may alternatively correspond to an entity that includes another function in addition to an access and mobility management function. The location management function entity may alternatively be replaced with a "location management function", a "second core network device", or another name. The location management function entity may alternatively correspond to an entity that includes another function in addition to a location management function.

In an implementation, the first indication information may be one bit. When a value of the bit is "1", it indicates that the location service is associated with the first service; or when a value of the bit is "0", it indicates that the location service is not associated with the first service. Alternatively, when a value of the bit is "0", it indicates that the location service is associated with the first service; or when a value of the bit is "1", it indicates that the location service is not associated with the first service.

In another implementation, the first indication information may be a service association identifier; or may be indication information including a specific field, and is used to associate a first service request and a location service request that are simultaneously initiated by the AMF.

In still another implementation, the first indication information may be a service identifier; or may be indication information including a specific field, and is used to associate all messages belonging to a same process. For example, a same service identifier needs to be used for messages belonging to a same process, and the service identifier is determined by an initiating peer of the same process.

S602: After receiving the first indication information, the LMF sends a location service request to the AMF.

After receiving the first indication information, the LMF may learn that the location service is associated with the first service. Therefore, the LMF sends the location service request to the AMF. The location service request is used to request to perform the location service. The location service request includes the first indication information.

S603: After receiving the location service request, the AMF sends a first service request and the location service request to an access network device based on the first indication information.

After receiving the location service request, the AMF parses the location service request, obtains the first indication information carried in the request, and learns that the location service is associated with the first service. Therefore, the AMF sends two types of requests to the access network device: the first service request and the location service request. The location service request is used to request to perform the location service, and the first service request is used to request to perform the first service.

In this embodiment, the AMF may identify the first indication information in the location service request, and other information may be invisible to the AMF. The AMF may sense only the first indication information. Therefore, the AMF may transparently transmit the location service request. The AMF may alternatively parse the location service request.

After sending the first indication information, the AMF may wait for a period of time. If the AMF receives the location service request carrying the first indication information, the AMF simultaneously sends the first service request and the location service request to the access network device. After sending the first indication information and waiting for a period of time, if the AMF does not receive the location service request carrying the first indication information, the AMF initiates a normal first service procedure, does not respond, or re-performs S601.

Therefore, there are at least the following four implementations in which the AMF sends the first service request and the location service request to the access network device:

In an implementation, the AMF may send the first service request and the location service request together to the access network device by controlling a time sequence. For example, the first service request and the location service request are consecutively sent in slots, and the AMF may transparently transmit the location service request. Alternatively, the first service request and the location service request are sent within first time.

In another implementation, the AMF may alternatively place a location service request field into a first service request field, and send them together to the access network device.

In still another implementation, the AMF may alternatively place a first service request field into a location service request field, and send them together to the access network device.

In still another implementation, the AMF may parse the location service request, and the AMF combines the first service request and the location service request into a same message and sends the message to the access network device; or the AMF sends, to the access network device, a message carrying the first service request and the location service request.

S604: After receiving the first service request and the location service request, the access network device sends a first message to the terminal.

In this embodiment, an example in which the terminal is a tag is used. After receiving the first service request and the location service request, the access network device learns that the first service and the location service need to be performed on the terminal. An implementation in which the access network device receives the first service request and the location service request may be as follows: For example, the first service request and the location service request are received in consecutive slots, one first service request including a location service request is received, one location service request including a first service request is received, or the first service request and the location service request are received in a first time period, where the first time period may be specified in a protocol, or may be configured by the AMF for the access network device. The tag does not support a complex design and does not support complex signaling exchanging. Therefore, in this embodiment, an existing procedure of the tag may be reused for positioning, and no new signaling is introduced at an air interface side. Therefore, the access network device sends the first message to the terminal. The first message is at least one of the following messages: a select message, a paging message, a query message, a random access response, a beacon (Beacon), a system message, a synchronization message, a location sequence, or an excitation message.

The first message includes positioning configuration information. The positioning configuration information includes at least one of the following information: a sending periodicity of an uplink positioning signal, a quantity of times of sending the uplink positioning signal, a positioning signal type, a sending time period of the positioning signal, a sending time offset value of the positioning signal, a sending frequency of the positioning signal, and an absolute time point for sending the positioning signal. The sending periodicity of the uplink positioning signal is a time interval for sending the uplink positioning signal. The quantity of times of sending the uplink positioning signal is a quantity of sending times of the uplink positioning signal. The positioning signal type includes at least one of the following: an uplink positioning signal and a downlink positioning signal. The uplink positioning signal includes a location sequence, a 16-bit random number (namely, an RN16), an EPC, uplink data, a random access request, and a user identifier. The user identifier is an identifier of the terminal, and may be an identifier for an access network side to identify the terminal, may be an identifier for a core network side to identify the terminal, or may be an identifier for a private network element or a private server to identify the terminal. The downlink positioning signal includes: a location sequence, a beacon (Beacon), query (Query), query repetition (QueryRep), select (Select), a random access acknowledgement, a synchronization signal, downlink data, and a system message. The sending time period of the positioning signal indicates duration for sending at least one positioning signal in the sending periodicity of the positioning signal. The sending time offset value of the positioning signal indicates a time offset value between sending of the signal and receiving of a reference signal, the sending time offset value of the positioning signal is greater than or equal to 0, and the reference signal may include at least one of the following signals: a select message, a paging message, a query message, a random access response, a beacon (Beacon), a system message, and a synchronization message. The sending frequency of the positioning signal indicates a frequency at which the terminal sends the positioning signal.

In an existing terminal positioning solution, a terminal that is synchronized with an access network device can determine a sending occasion of a positioning signal based on frame number indication information. The occasion is a time position relative to a frame number, and needs to be frame aligned between the terminal and a base station. However, this is not applicable to an asynchronous access tag, because the asynchronous access tag cannot implement precise frame number alignment with a cell. In this implementation, the terminal sends a positioning signal based on the positioning configuration information, so that the positioning signal can be accurately sent, positioning reliability can be improved, and signaling overheads can be reduced.

The positioning configuration information may further include a sending configuration of the downlink positioning signal. For example, the positioning configuration information may further include at least one of the following information:

A start time point of the downlink positioning signal, which may indicate a start sending time point of at least one downlink positioning signal. For example, the start time point may be a specific time value of a 1^{st} sent downlink positioning signal, may be a frame number of a frame in which a 1^{st} sent downlink positioning signal is located, or may be a time position relative to a reference signal, where the reference signal may include at least one of the following signals: a select message, a paging message, a query message, a random access response, a beacon (Beacon), a system message, and a synchronization message; a periodicity of the downlink positioning signal, which may indicate a sending periodicity of at least one downlink positioning signal; duration of the downlink positioning signal, which may indicate duration of at least one downlink positioning signal; and a frequency at which the downlink positioning signal is located, which may indicate frequency domain information of at least one downlink positioning signal, where optionally, if there is no frequency information, it may be considered by default that the reference signal and the first message are sent at a same frequency.

The first message may further include a measurement quantity. The measurement quantity refers to a parameter that is required by the access network device or the terminal to perform positioning measurement, and is related to a positioning technology specifically used by the LMF. For example, a positioning technology that may be used by the LMF is UL-AoA positioning. In this technology, an uplink signal needs to be measured, and a measurement quantity includes an uplink angle of arrival AoA of a signal from the terminal. Alternatively, the positioning technology may be DL-AoD. In this technology, a downlink signal needs to be measured, and a measurement quantity includes downlink angles of departure AoDs from a plurality of TRPs.

S605: After receiving the first message, the terminal sends at least one positioning signal to the access network device based on the positioning configuration information.

After receiving the first message, the terminal parses the positioning configuration information carried in the first message.

In an implementation, the terminal sends a location sequence/RN16/EPC/uplink data/random access request/user identifier to the access network device at least once based on the positioning configuration information.

The location sequence is a special sequence used for positioning measurement.

If an existing signal is reused as the positioning signal, an original function of the reference signal may not be changed, and no additional resource is occupied. In this way, a plurality of functions can be implemented by using one signal, to improve system compatibility and resource utilization.

Specifically, the terminal sends the location sequence/RN16/EPC/uplink data/random access request/user identifier for the required quantity of sending times to the access network device based on the required positioning signal type and the sending periodicity of the positioning signal. The positioning signal herein is not limited to the location sequence/RN16/EPC/uplink data/random access request/user identifier, and may be any control signal or data sent by the terminal in an uplink direction.

The terminal repeatedly sends the location sequence/RN16/EPC/uplink data/random access request/user identifier, so that the access network device performs accurate positioning measurement on the location sequence/RN16/EPC/uplink data/random access request/user identifier.

Further, the method may further include the following steps (represented by dashed lines in the figure).

S606: After receiving the at least one positioning signal, the access network device measures the at least one positioning signal to obtain a measurement result.

After receiving the repeatedly sent positioning signal, the access network device may accurately measure the positioning signal to obtain the measurement result.

In steps S605 and S606 in this embodiment, an uplink signal measurement-based positioning procedure is used as an example. Alternatively, this embodiment may also be applicable to downlink positioning. In another implementation, the terminal senses and measures at least one of the downlink location sequence, the beacon, the synchronization signal, the Query, the QueryRep, the Select, the random access acknowledgement signal, and the downlink data based on the positioning configuration information of the downlink positioning signal.

The beacon signal is used by the access network device and/or a reader to indicate frequency information to the terminal device, and may be used by a tag device to determine a frequency of the positioning signal based on the frequency information. The downlink location sequence is a special sequence used for positioning measurement.

The terminal sends a measurement result of the downlink positioning signal to the access network device. Optionally, the terminal may alternatively place the measurement result into uplink data, an RN 16/EPC, a user identifier, or a random access request message, and report the uplink data, the RN16/EPC, the user identifier, or the random access request message to the access network device. The terminal may alternatively report the measurement result to the access network device by using a reporting message.

S607: The access network device sends the measurement result to the LMF.

The measurement result includes the result of measuring the uplink positioning signal by the access network device and/or the result of measuring the downlink positioning signal by the terminal.

In an implementation, the access network device transparently transmits the measurement result to the LMF through the AMF. In another implementation, the access network device sends the measurement result to the AMF. After the AMF confirms the measurement result, the AMF sends the measurement result to the LMF.

The access network device sends the measurement result to the LMF, so that the LMF may calculate the measurement result based on a used positioning calculation manner, to calculate a positioning result of the terminal, and the LMF may further send the positioning result of the terminal to the AMF.

According to the communication method provided in this embodiment of this application, the AMF indicates, by using the first indication information, that the location service is associated with the first service. Therefore, when sending the first service request to the access network device, the AMF further sends the location service request. The access network device reuses an existing procedure of the low-capability terminal, and sends the first message to the low-capability terminal, so that the low-capability terminal sends the positioning signal to the access network side based on the positioning configuration information, to position the low-capability terminal.

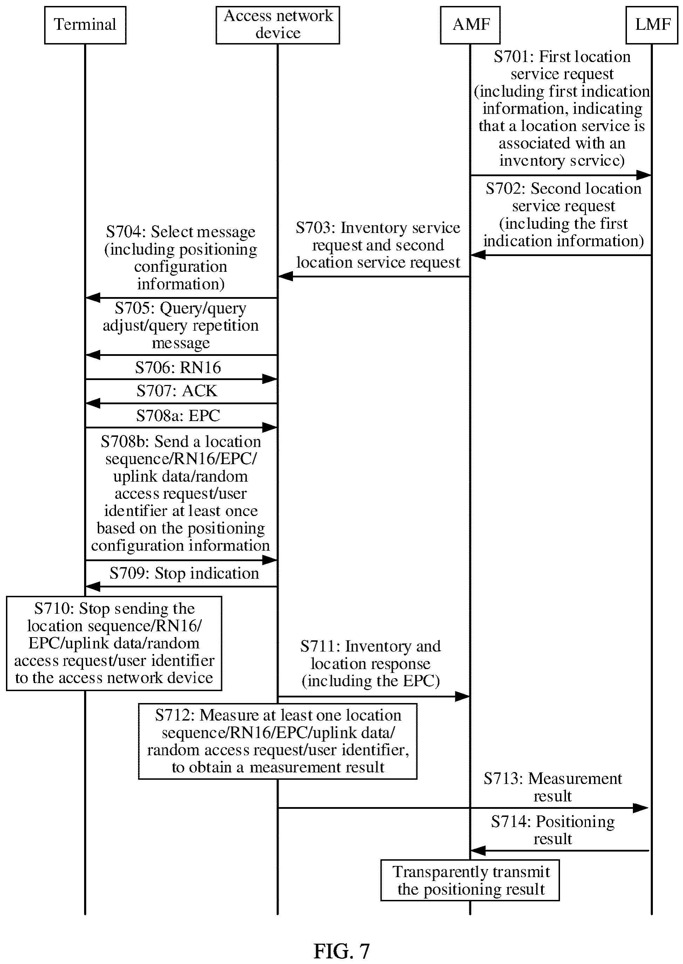

FIG. 7 is a schematic flowchart of another communication method according to an embodiment of this application. In this embodiment, an example in which a terminal is a tag is used for description, and an inventory procedure is reused for positioning. In addition, an AMF may not include an identifier of the terminal in an inventory service request, and an access network device performs inventory on a terminal group. Alternatively, an AMF may include a terminal group identifier in an inventory service request, and an access network device performs inventory on a specified terminal group. This is not limited herein. For example, the method may include the following steps.

S701: An AMF sends a first location service request to an LMF.

In this embodiment, when the AMF receives an inventory service request and a location service request from a terminal or an external network (for example, the foregoing LCS client or A-IoT private network element), or when the AMF initiates an inventory service and a location service, the AMF sends the first location service request to the LMF. An existing location service request may be reused as the first location service request, or the first location service request may be a newly defined location service request.

The first location service request includes first indication information. The first indication information indicates that the location service is associated with the inventory service, indicates that a triggered location service procedure includes the inventory service, or indicates that a triggered inventory service procedure includes the location service.

In an implementation, the first indication information may be one bit. When a value of the bit is "1", it indicates that the location service is associated with the inventory service; or when a value of the bit is "0", it indicates that the location service is not associated with the inventory service. Alternatively, when a value of the bit is "0", it indicates that the location service is associated with the inventory service; or when a value of the bit is "1", it indicates that the location service is not associated with the inventory service.

In another implementation, the first indication information may be a service association identifier; or may be indication information including a specific field, and is used to associate an inventory service request and a location service request that are simultaneously initiated by the AMF.

Optionally, the first location service request may further include a first cell list, and is used to query whether an access network device in the first cell list has a measurement capability. The first cell list includes at least one access network device.

In still another implementation, the first indication information may be a service identifier; or may be indication information including a specific field, and identifies the location service and the inventory service that are simultaneously initiated by the AMF.

S702: After receiving the first indication information, the LMF sends a second location service request to an access network device through the AMF.

The second location service request is used to request to perform the location service. This procedure is similar to an existing procedure. The LMF sends the second location service request to the access network device through the AMF. A difference lies in that the second location service request includes the first indication information.

Optionally, the access network device is the access network device in the first cell list.

Further, the second location service request may further include positioning configuration information, a measurement quantity, and a first location service identifier. The positioning configuration information includes at least one of the following information: a sending periodicity of a positioning signal, a quantity of times of sending the positioning signal, a positioning signal type, a sending time period of the positioning signal, a sending time offset value of the positioning signal, a sending frequency of the positioning signal, and an absolute time point for sending the positioning signal. The sending periodicity of the positioning signal is a time interval for sending the positioning signal. The quantity of times of sending the positioning signal is a quantity of sending times of the positioning signal. The positioning signal type includes at least one of the following: a location sequence, a 16-bit random number (namely, an RN 16), an EPC, uplink data, a random access request, and a user identifier. The user identifier is an identifier of the terminal. The measurement quantity refers to a parameter that is required by the access network device to perform positioning measurement, and is related to a positioning technology specifically used by the LMF. For example, if the positioning technology used by the LMF is UL-AoA positioning, the measurement quantity includes an uplink angle of arrival of the terminal. The first location service identifier identifies a first location service.

For example, the second location service request may alternatively not include the positioning configuration information, but the positioning configuration information is subsequently determined by the access network device.

It may be understood that the AMF may identify the first indication information in the second location service request, and other information (for example, the positioning configuration information and the measurement quantity) may be invisible to the AMF. The AMF may sense only the first indication information.

S703: After receiving the second location service request, the AMF sends the inventory service request and the second location service request to the access network device based on the first indication information.

After receiving the second location service request, the AMF parses the second location service request, obtains the first indication information carried in the second location service request, and learns that the location service is associated with the inventory service. Therefore, the AMF sends two types of requests to the access network device: the inventory service request and the second location service request. The second location service request is used to request to perform the location service, and the inventory service request is used to request to perform the inventory service.

As described above, the AMF may identify the first indication information in the second location service request, and other information may be invisible to the AMF. The AMF may sense only the first indication information. Therefore, the AMF may transparently transmit the second location service request. The AMF may alternatively parse the second location service request.

After sending the first indication information, the AMF may wait for a period of time. If the AMF receives the second location service request carrying the first indication information, the AMF simultaneously sends the inventory service request and the second location service request to the access network device. After sending the first indication information and waiting for a period of time, if the AMF does not receive the second location service request carrying the first indication information, the AMF initiates a normal inventory procedure, does not respond, or re-performs S701.

The inventory service request includes a first service identifier. For example, the first service identifier may indicate the inventory service, and the first service identifier may also be used to associate all messages belonging to a same process. For example, a same service identifier needs to be used for messages belonging to a same process, and the first service identifier is determined by an initiating peer of the process. The first service identifier may also include the first indication information.

There are at least the following four implementations in which the AMF sends the inventory service request and the second location service request to the access network device:

In an implementation, the AMF may send the inventory service request and the second location service request together to the access network device by controlling a time sequence. For example, the inventory service request and the second location service request are consecutively sent in slots, and the AMF may transparently transmit the location service request. Alternatively, the inventory service request and the second location service request are sent within first time.

In another implementation, the AMF may alternatively place a second location service request field into an inventory service request field, and send them together to the access network device.

In still another implementation, the AMF may alternatively place an inventory service request field into a second location service request field, and send them together to the access network device.

In still another implementation, the AMF may parse the second location service request, and the AMF combines the inventory service request and the second location service request into a same message and sends the message to the access network device; or the AMF sends, to the access network device, a message carrying the inventory service request and the second location service request.

S704: After receiving the inventory service request and the second location service request, the access network device sends a select (select) message to the terminal.

In this embodiment, an example in which the terminal is a tag is used. After receiving the inventory service request and the second location service request, the access network device learns that the inventory service and the location service need to be performed on the terminal. An implementation in which the access network device receives the inventory service request and the second location service request may be as follows: For example, the inventory service request and the second location service request are received in consecutive slots, one inventory service request including a second location service request is received, one second location service request including an inventory service request is received, or the inventory service request and the second location service request are received in a first time period, where the first time period may be specified in a protocol, or may be configured by the AMF for the access network device. The tag does not support a complex design and does not support complex signaling exchanging, and an existing service of the tag is mainly inventory. Therefore, in this embodiment, an inventory procedure may be reused for positioning, and no new signaling is introduced at an air interface side.

For example, the access network device may send a select message to the terminal, and include positioning configuration information in the select message. For a meaning of the positioning configuration information, refer to the foregoing descriptions.

S705: The access network device sends a query (Query)/query adjust (QueryAdjust)/query repetition (QueryRep) message to the terminal.

For this step, refer to step S402 in the embodiment shown in FIG. 4.

A difference is that the query/query adjust/query repetition message may also include the positioning configuration information and the measurement quantity.

S706: If a slot counter generated by the terminal is 0, the terminal feeds back an RN16; otherwise, the terminal provides no feedback.

S707: The access network device sends an ACK to the terminal, where the ACK includes the same RN 16.

S708a: The terminal compares the RN 16 fed back by the terminal with the RN 16 sent by the access network device in step S706. If the two RN16 match, the terminal feeds back an EPC; otherwise, the terminal provides no feedback.

An existing inventory procedure is reused for the foregoing S704 to S708a. For details, refer to related descriptions in the embodiment in FIG. 4. Details are not described herein again.

S708b: After receiving the select (select) message/query (Query) message/query adjust (QueryAdjust) message/query repetition (QueryRep) message, the terminal sends a location sequence/RN16/EPC/uplink data/random access request/user identifier to the access network device at least once based on the positioning configuration information.

The location sequence is a special sequence used for positioning measurement.

After receiving the select message/paging message/query message/random access response/beacon (Beacon)/system message/synchronization signal, the terminal parses the positioning configuration information carried in the select message/paging message/query message/random access response/beacon (Beacon)/system message/synchronization signal. The positioning configuration information includes at least one of the following information: a sending periodicity of an uplink positioning signal, a quantity of times of sending the uplink positioning signal, and a positioning signal type. The positioning signal type includes at least one of the following: a location sequence, an RN 16, an EPC, uplink data, a random access request, and a user identifier. S706 to S708a may be considered as a random access process. Therefore, the terminal repeatedly sends the location sequence/RN16/EPC/uplink data/random access request/user identifier to the access network device based on the positioning configuration information.

Specifically, the terminal sends the location sequence/RN16/EPC/uplink data/random access request/user identifier for the required quantity of sending times to the access network device based on the required positioning signal type and the sending periodicity of the positioning signal. The positioning signal herein is not limited to the location sequence/RN16/EPC/uplink data/random access request/user identifier, and may be any control signal or data sent by the terminal in an uplink direction.

The terminal repeatedly sends the location sequence/RN16/EPC/uplink data/random access request/user identifier, so that the access network device performs accurate positioning measurement on the location sequence/RN16/EPC/uplink data/random access request/user identifier.

S709: The access network device sends a stop indication to the terminal.

For example, if the positioning configuration information does not include the quantity of times of sending the positioning signal, the access network device may send the stop indication to the terminal; or if the positioning configuration information includes the quantity of times of sending the positioning signal, in some scenarios, the access network device may temporarily indicate the terminal to stop sending, to reduce signaling overheads. The stop indication indicates the terminal to stop sending the positioning signal.

S710: The terminal stops sending the location sequence/RN16/EPC/uplink data/random access request/user identifier to the access network device.

After receiving the stop indication, the terminal does not continue to send the location sequence/RN16/EPC/uplink data/random access request/user identifier to the access network device.

S711: The access network device sends an inventory and location response to the AMF.

The inventory and location response includes the first service identifier.

After receiving an inventory result (for example, the EPC) in the foregoing steps S708a and S708b, the access network device sends the inventory and location response to the AMF. The inventory and location response includes the user identifier (for example, the EPC). The AMF may perform inventory on the tag based on the inventory and location response.

S712: After receiving the repeatedly sent positioning signal, the access network device measures at least one location sequence/RN16/EPC/uplink data/random access request/user identifier to obtain a measurement result.

After receiving the repeatedly sent positioning signal, the access network device may accurately measure the positioning signal to obtain the measurement result.

S713: The access network device sends the measurement result to the LMF.

For example, the measurement result may further include the user identifier, an identifier of the access network device, a cell identifier, the first location service identifier, the first indication information, and an identifier of the access network device.

In an implementation, the access network device transparently transmits the measurement result to the LMF through the AMF.

In another implementation, the access network device sends the measurement result to the AMF. After the AMF confirms the measurement result, the AMF sends the measurement result to the LMF.

S714: After receiving the measurement result, the LMF calculates a positioning result based on the measurement result, and sends the positioning result to the AMF.

After receiving the measurement result, the LMF may calculate the measurement result based on the used positioning technology, to obtain the positioning result of the terminal through calculation. Then, the LMF sends the positioning result of the terminal to the AMF.

The positioning result may include the first indication information.

As described above, the terminal or the external network may initiate an inventory service request and a location service request to the AMF. After receiving the positioning result, the AMF may transparently transmit the positioning result to the terminal or the external network.

If the AMF initiates an inventory service request and a location service request, the AMF stores the positioning result.

The foregoing procedure is for a group tag. In this case, the LMF sequentially calculates a positioning result of each terminal in sequence, and sends the positioning result to the AMF. After receiving the positioning results of the terminals, the AMF may sequentially send the positioning results to the terminals or the external network, or may send the positioning results together to the external network.

In addition, a plurality of access network devices may simultaneously or not simultaneously perform inventory on a same tag. If the LMF receives results of measurement performed by the plurality of access network devices on the tag, the LMF may accurately position the tag based on the results of the measurement performed by the plurality of access network devices, to achieve a multi-station positioning effect.

According to the communication method provided in this embodiment of this application, the inventory procedure is reused, and additional positioning is performed, in other words, inventory signaling may be reused for positioning. After sending the EPC, the terminal may repeatedly send the location sequence/RN16/EPC/uplink data/random access request/user identifier based on the positioning configuration information, to improve positioning accuracy. The positioning configuration information may be carried in the select message, the query message, the query adjust message, or the query repetition message.

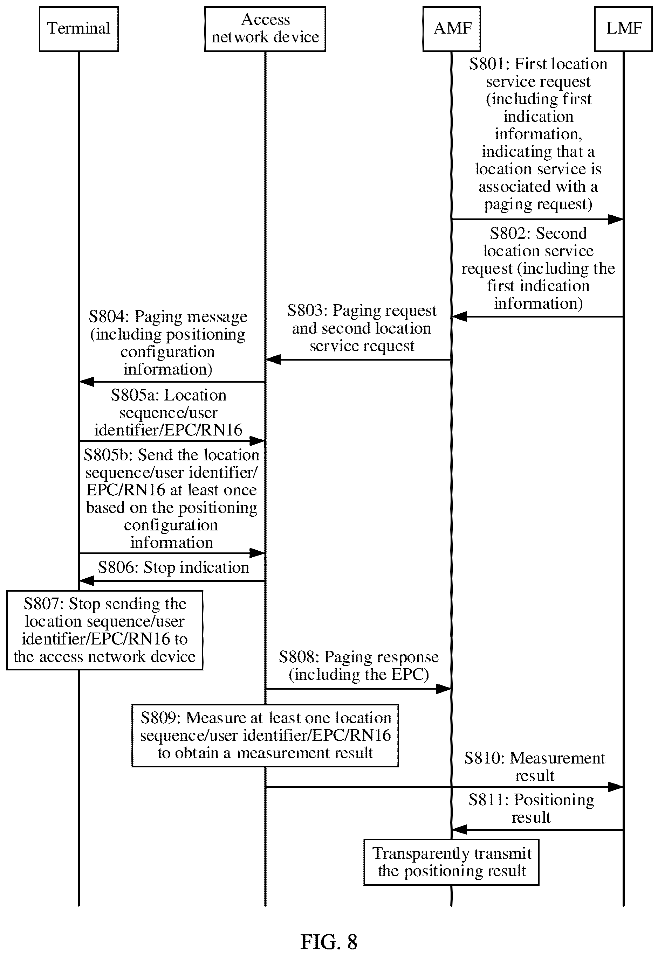

FIG. 8 is a schematic flowchart of still another communication method according to an embodiment of this application. In this embodiment, an example in which a terminal is a tag is used for description, and a paging procedure is reused for positioning. For example, the method is particularly applicable to separate positioning of an active tag (without random access). In addition, an AMF adds a user identifier to a paging message, and an access network device pages a specific tag. For example, the method may include the following steps.

S801: An AMF sends a first location service request to an LMF.

In this embodiment, when the AMF receives a location service request from a terminal or an external network (for example, the foregoing LCS client or A-IoT private network element), or when the AMF initiates a paging request and a location service, the AMF sends the first location service request to the LMF. An existing location service request may be reused as the first location service request, or the first location service request may be a newly defined location service request.

The first location service request includes first indication information. The first indication information indicates that the location service is associated with the paging request, indicates that a triggered location service procedure includes the paging request, or indicates that a triggered paging request procedure includes the location service.

In an implementation, the first indication information may be one bit. When a value of the bit is "1", it indicates that the location service is associated with the paging request; or when a value of the bit is "0", it indicates that the location service is not associated with the paging request. Alternatively, when a value of the bit is "0", it indicates that the location service is associated with the paging request; or when a value of the bit is "1", it indicates that the location service is not associated with the paging request.

In another implementation, the first indication information may be a service association identifier (transaction ID); or may be indication information including a specific field, and is used to associate the paging request and the location service request that are simultaneously initiated by the AMF.

Optionally, the first location service request may include a first cell list, and is used to query whether an access network device in the first cell list has a measurement capability. The first cell list includes at least one access network device.

In still another implementation, the first indication information may be a service identifier; or may be indication information including a specific field, and identifies the location service and the paging request that are simultaneously initiated by the AMF.

S802: After receiving the first indication information, the LMF sends a second location service request to an access network device through the AMF.

The second location service request is used to request to perform the location service. This procedure is similar to an existing procedure. The LMF sends the second location service request to the access network device through the AMF. A difference lies in that the second location service request includes the first indication information.

For a specific implementation of this step, refer to step S702 in the embodiment shown in FIG. 7. Details are not described herein again.

S803: After receiving the second location service request, the AMF sends the paging request and the second location service request to the access network device based on the first indication information.

After receiving the second location service request, the AMF parses the second location service request, obtains the first indication information carried in the second location service request, and learns that the location service is associated with the paging service. Therefore, the AMF sends two types of requests to the access network device: the paging request and the second location service request. The second location service request is used to request to perform the location service, and the paging request is used to request to perform paging.

As described above, the AMF may identify the first indication information in the second location service request, and other information may be invisible to the AMF. The AMF may sense only the first indication information. Therefore, the AMF transparently transmits the second location service request. The AMF may alternatively parse the second location service request.

After sending the first indication information, the AMF may wait for a period of time. If the AMF receives the second location service request carrying the first indication information, the AMF simultaneously sends the paging request and the second location service request to the access network device. After sending the first indication information and waiting for a period of time, if the AMF does not receive the second location service request carrying the first indication information, the AMF initiates a normal paging procedure or does not respond.

The paging request includes a first service identifier. For example, the first service identifier indicates the paging request, and the first service identifier may also be used to associate all messages belonging to a same process. For example, a same service identifier needs to be used for messages belonging to a same process, and the first service identifier is determined by an initiating peer of the process. The first service identifier may also include the first indication information.

There are at least the following four implementations in which the AMF sends the paging request and the second location service request to the access network device:

In an implementation, the AMF may send the paging request and the second location service request together to the access network device by controlling a time sequence. For example, the paging request and the second location service request are consecutively sent in slots, and the AMF may transparently transmit the location service request. Alternatively, the paging request and the second location service request are sent within first time.

In another implementation, the AMF may alternatively place a second location service request field into a paging request field, and send them together to the access network device.

In still another implementation, the AMF may alternatively place a paging request field into a second location service request field, and send them together to the access network device.

In still another implementation, the AMF may parse the second location service request, and the AMF combines the paging request and the second location service request into a same message and sends the message to the access network device; or the AMF sends, to the access network device, a message carrying the paging request and the second location service request.

S804: After receiving the paging request and the second location service request, the access network device sends a paging message to the terminal.

A difference between this embodiment and the embodiment shown in FIG. 7 lies in that a specific terminal is positioned by reusing a paging procedure. For example, the terminal is a tag. After receiving the paging request and the second location service request, the access network device learns that the paging service and the location service need to be performed on the terminal. An implementation in which the access network device receives the paging request and the second location service request may be as follows: For example, the paging request and the second location service request are received in consecutive slots, one paging request including a second location service request is received, one second location service request including a paging request is received, or the paging request and the second location service request are received in a first time period, where the first time period may be specified in a protocol, or may be configured by the AMF for the access network device. The tag does not support a complex design and does not support complex signaling exchanging. Therefore, in this embodiment, the paging procedure may be reused for positioning, and no new signaling is introduced at an air interface side.

For example, the access network device may send a paging message to the terminal, and include positioning configuration information in the paging message. For a meaning of the positioning configuration information, refer to the foregoing descriptions.

S805a: After receiving the paging message, the terminal sends a location sequence/user identifier/RN16/EPC to the access network device.

After the terminal receives the paging message, the paging message is used to page the terminal. Therefore, the terminal sends the user identifier (for example, may be the EPC) to the access network device. The EPC uniquely identifies the tag.

In addition, after receiving the paging message, the terminal obtains, through parsing, the positioning configuration information carried in the paging message, and learns that the terminal needs to be positioned. Therefore, the terminal sends a positioning signal to the access network device. A type of the positioning signal type may be at least one of the following: a location sequence, a user identifier, an EPC, and an RN 16.

S805b: The terminal sends the location sequence/user identifier/RN16/EPC to the access network device at least once based on the positioning configuration information.

The terminal obtains the positioning configuration information through parsing, where the positioning configuration information includes at least one of the following information: a sending periodicity of the positioning signal, a quantity of times of sending the positioning signal, and a positioning signal type. Therefore, the terminal sends a positioning signal or positioning signals of any one or more of the foregoing types to the access network device at least once based on the positioning configuration information.

Specifically, the terminal sends the positioning signal for the required quantity of sending times to the access network device based on the required positioning signal type and the sending periodicity of the positioning signal. The positioning signal herein is not limited to the foregoing positioning signal type, and may be any control signal or data sent by the terminal in an uplink direction.

The terminal repeatedly sends the positioning signal, so that the access network device performs accurate positioning measurement on the positioning signal.

S806: The access network device sends a stop indication to the terminal.

The stop indication indicates the terminal to stop sending the positioning signal.

For a specific implementation of this step, refer to step S709 in the embodiment shown in FIG. 7. Details are not described herein again.

S807: The terminal stops sending the location sequence/user identifier/RN16/EPC to the access network device.

For a specific implementation of this step, refer to step S710 in the embodiment shown in FIG. 7. Details are not described herein again.

S808: The access network device sends a paging response to the AMF.

The paging response is a response to the paging request. The paging response includes the user identifier (for example, the EPC). After the AMF receives the paging response, the AMF compares the EPC of the terminal that is requested by the AMF for paging with the EPC carried in the paging response. If the EPCs are consistent, the paging ends; or if the EPCs are inconsistent, the paging fails.

The paging response may further include the first service identifier.

S809: After receiving the repeatedly sent location sequence/user identifier/EPC/RN 16, the access network device measures at least one location sequence/user identifier/EPC/RN 16, to obtain a measurement result.

After receiving the repeatedly sent location sequence/user identifier/EPC/RN 16, the access network device may accurately measure the location sequence/user identifier/EPC/RN 16, to obtain the measurement result.

S810: The access network device sends the measurement result to the LMF.

For example, the measurement result may further include the user identifier, an identifier of the access network device, a cell identifier, a first location service identifier, and the first indication information.

S811: After receiving the measurement result, the LMF calculates a positioning result based on the measurement result, and sends the positioning result to the AMF.

For a specific implementation of this step, refer to step S714 in the embodiment shown in FIG. 7. Details are not described herein again.

As described above, the terminal or the external network may initiate a paging request and a location service request to the AMF. After receiving the positioning result, the AMF may transparently transmit the positioning result to the terminal or the external network.

The positioning result may include the first indication information.

If the AMF initiates an inventory service request and a location service request, the AMF stores the positioning result.

According to the communication method provided in this embodiment of this application, the paging procedure is reused, and additional positioning is performed, in other words, the paging message may be reused for positioning. After sending the EPC, the terminal may repeatedly send the location sequence/RN16/EPC/user identifier based on the positioning configuration information, to improve positioning accuracy. The positioning configuration information may be carried in the paging message.

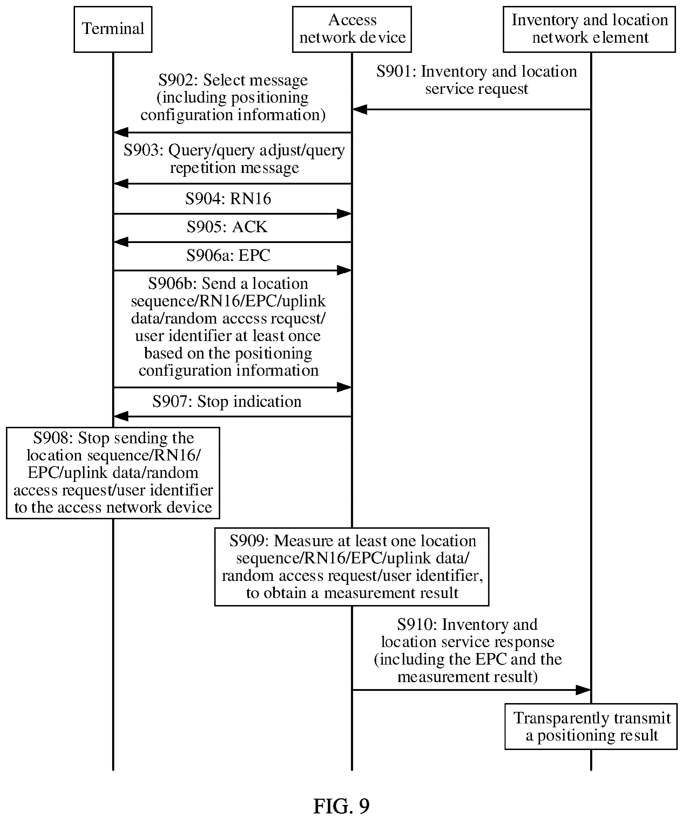

FIG. 9 is a schematic flowchart of still another communication method according to an embodiment of this application. In this embodiment, a new network element is introduced: an inventory and location network element (inventory and location management function, TLMF), where the inventory and location network element may be configured to initiate an inventory and location service request. For example, the method may include the following steps.

S901: An inventory and location network element sends an inventory and location service request to an access network device.

The inventory and location service request indicates that a location service is associated with an inventory service.

For example, the inventory and location service request may include positioning configuration information. For a meaning of the positioning configuration information, refer to the foregoing descriptions.

In this embodiment, the inventory and location network element is merely a name, and the name does not constitute a limitation on the entity, and is used to implement inventory and location functions. For example, the inventory and location network element may alternatively be replaced with an "inventory and location function", an "inventory and location entity", a "third core network device", or another name.

S902: After receiving the inventory and location service request, the access network device sends a select (select) message to a terminal.

In this embodiment, an example in which the terminal is a tag is used. After receiving the foregoing inventory and location service request, the access network device learns that the location service is associated with the inventory service. The tag does not support a complex design and does not support complex signaling exchanging, and an existing service of the tag is mainly inventory. Therefore, in this embodiment, an inventory procedure may be reused for positioning, and no new signaling is introduced at an air interface side.

For example, the access network device may send a select message to the terminal, and include the positioning configuration information in the select message.

S903: The access network device sends a query (Query)/query adjust (QueryAdjust)/query repetition (QueryRep) message to the terminal.

For a specific implementation of this step, refer to step S705 in the embodiment shown in FIG. 7. Details are not described herein again.

S904: If a slot counter generated by the terminal is 0, the terminal feeds back an RN16; otherwise, the terminal provides no feedback.

For a specific implementation of this step, refer to step S706 in the embodiment shown in FIG. 7. Details are not described herein again.

S905: The access network device sends an ACK to the terminal, where the ACK includes the same RN 16.

For a specific implementation of this step, refer to step S707 in the embodiment shown in FIG. 7. Details are not described herein again.

S906a: The terminal compares the RN 16 fed back by the terminal with the RN 16 sent by the access network device in step S906. If the two RN16 match, the terminal feeds back an EPC; otherwise, the terminal provides no feedback.

For a specific implementation of this step, refer to step S708a in the embodiment shown in FIG. 7. Details are not described herein again.

S906b: After receiving the select message, the terminal sends a location sequence/RN16/EPC/uplink data/random access request/user identifier to the access network device at least once based on the positioning configuration information.

For a specific implementation of this step, refer to step S708b in the embodiment shown in FIG. 7. Details are not described herein again.

S907: The access network device sends a stop indication to the terminal.

The stop indication indicates the terminal to stop sending the location sequence/RN16/EPC/uplink data/random access request/user identifier.

For a specific implementation of this step, refer to step S709 in the embodiment shown in FIG. 7. Details are not described herein again.

S908: The terminal stops sending the location sequence/RN16/EPC/uplink data/random access request/user identifier to the access network device.

For a specific implementation of this step, refer to step S710 in the embodiment shown in FIG. 7. Details are not described herein again.

S909: After receiving the at least one location sequence/RN16/EPC/uplink data/random access request/user identifier, the access network device measures the at least one location sequence/RN16/EPC/uplink data/random access request/user identifier, to obtain a measurement result.

For a specific implementation of this step, refer to step S712 in the embodiment shown in FIG. 7. Details are not described herein again.

S910: The access network device sends an inventory and location service response to the inventory and location network element.

After receiving an inventory result (for example, the EPC) in the foregoing steps S906a and S906b, the access network device sends the inventory and location service response to the inventory and location network element. The inventory and location service response includes the user identifier (for example, the EPC). The inventory and location network element may perform inventory on the tag based on the inventory result.

The inventory and location service response further includes the measurement result. The inventory and location network element may calculate the measurement result based on the measurement result and a used positioning technology, to obtain a positioning result through calculation.

As described above, the terminal or an external network may initiate an inventory and location service request to the inventory and location network element. After receiving the positioning result, the inventory and location network element may transparently transmit the positioning result to the terminal or the external network.

If the inventory and location network element initiates an inventory and location service request, the inventory and location network element stores the positioning result.

The foregoing procedure is for a group tag. After sequentially calculating a positioning result of each terminal, the inventory and location network element may sequentially send the positioning result to each terminal or the external network, or may send the positioning results together to the external network.

In addition, a plurality of access network devices may simultaneously or not simultaneously perform inventory on a same tag. If the inventory and location network element receives results of measurement performed by the plurality of access network devices on the tag, the inventory and location network element may accurately position the tag based on the results of the measurement performed by the plurality of access network devices, to achieve a multi-station positioning effect.

According to the communication method provided in this embodiment of this application, the inventory procedure is reused, and additional positioning is performed, in other words, inventory signaling may be reused for positioning. After sending the EPC, the terminal may repeatedly send the location sequence/RN16/EPC/uplink data/random access request/user identifier based on the positioning configuration information, to improve positioning accuracy. The positioning configuration information may be carried in the select message, the query message, the query adjust message, or the query repetition message.

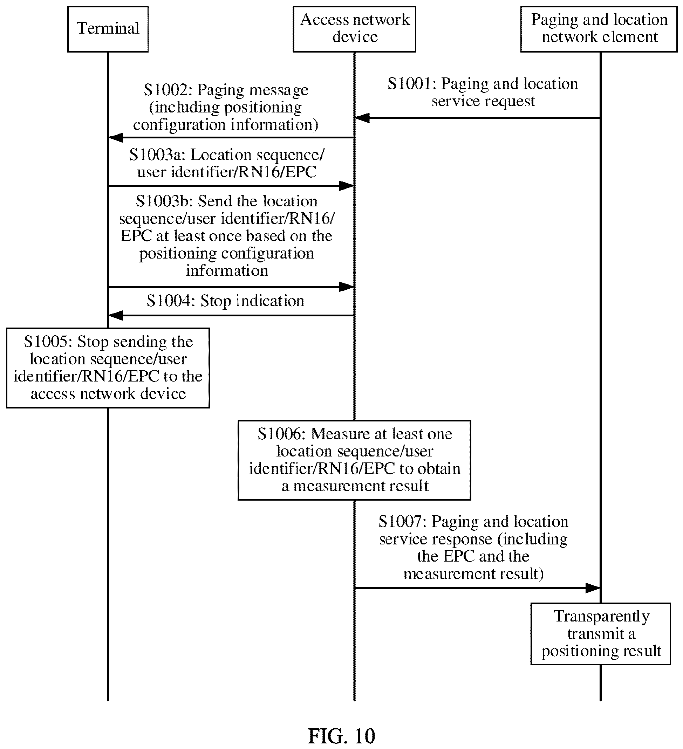

FIG. 10 is a schematic flowchart of still another communication method according to an embodiment of this application. In this embodiment, a new network element is introduced: a paging and location network element (paging and location management function, PLMF), where the paging and location network element may be configured to initiate a paging and location service request. For example, the method may include the following steps.

S1001: A paging and location network element sends a paging and location service request to an access network device.

The paging and location service request indicates that a location service is associated with a paging service.

For example, the paging and location service request may include positioning configuration information. For a meaning of the positioning configuration information, refer to the foregoing descriptions.

In this embodiment, the paging and location network element is merely a name, and the name does not constitute a limitation on the entity, and is used to implement paging and location functions. For example, the paging and location network element may alternatively be replaced with a "paging and location function", a "paging and location entity", a "third core network device", or another name.

S1002: After receiving the paging and location service request, the access network device sends a paging message to a terminal.

In this embodiment, an example in which the terminal is a tag is used. After receiving the paging and location service request, the access network device learns that the location service is associated with the paging service. The tag does not support a complex design and does not support complex signaling exchanging. Therefore, in this embodiment, a paging procedure may be reused for positioning, and no new signaling is introduced at an air interface side.

For example, the access network device may send a paging message to the terminal, and include the positioning configuration information in the paging message.

S1003a: After receiving the paging message, the terminal sends a location sequence/user identifier/RN16/EPC to the access network device.

For a specific implementation of this step, refer to step S805a in the embodiment shown in FIG. 8. Details are not described herein again.

S1003b: The terminal sends the location sequence/user identifier/RN16/EPC to the access network device at least once based on the positioning configuration information.

For a specific implementation of this step, refer to step S805b in the embodiment shown in FIG. 8. Details are not described herein again.

S1004: The access network device sends a stop indication to the terminal.

The stop indication indicates the terminal to stop sending the location sequence/user identifier/RN16/EPC.

For a specific implementation of this step, refer to step S806 in the embodiment shown in FIG. 8. Details are not described herein again.

S1005: The terminal stops sending the location sequence/user identifier/RN16/EPC to the access network device.

For a specific implementation of this step, refer to step S807 in the embodiment shown in FIG. 8. Details are not described herein again.

S1006: After receiving the at least one location sequence/user identifier/RN16/EPC, the access network device measures the at least one location sequence/user identifier/RN16/EPC, to obtain a measurement result.

For a specific implementation of this step, refer to step S809 in the embodiment shown in FIG. 8. Details are not described herein again.

S1007: The access network device sends a paging and location service response to the paging and location network element.

The paging and location service response is a response to the paging and location service request. The paging and location service response includes the user identifier (for example, the EPC). After receiving the paging and location service response, the paging and location network element compares the EPC of the terminal that is requested by the paging and location network element for paging with the EPC carried in the paging and location service response. If the EPCs are consistent, the paging ends; if the EPCs are inconsistent, the paging fails.

The paging and location service response further includes the measurement result. The paging and location network element may calculate the measurement result based on the measurement result and a used positioning technology, to obtain a positioning result through calculation.

As described above, the terminal or an external network may initiate a paging and location service request to the paging and location network element. After receiving the positioning result, the paging and location network element may transparently transmit the positioning result to the terminal or the external network.

If the paging and location network element initiates a paging and location service request, the paging and location network element stores the positioning result.

The foregoing procedure is for a group tag. After sequentially calculating a positioning result of each terminal, the paging and location network element may sequentially send the positioning result to each terminal or the external network, or may send the positioning results together to the external network.

In addition, a plurality of access network devices may simultaneously or not simultaneously page a same tag. If the paging and location network element receives results of measurement performed by the plurality of access network devices on the tag, the paging and location network element may accurately position the tag based on the results of the measurement performed by the plurality of access network devices, to achieve a multi-station positioning effect.

According to the communication method provided in this embodiment of this application, a paging procedure is reused, and additional positioning is performed, in other words, paging signaling may be reused for positioning. After sending the EPC, the terminal may repeatedly send the location sequence/RN16/EPC/user identifier based on the positioning configuration information, to improve positioning accuracy. The positioning configuration information may be carried in the paging message.

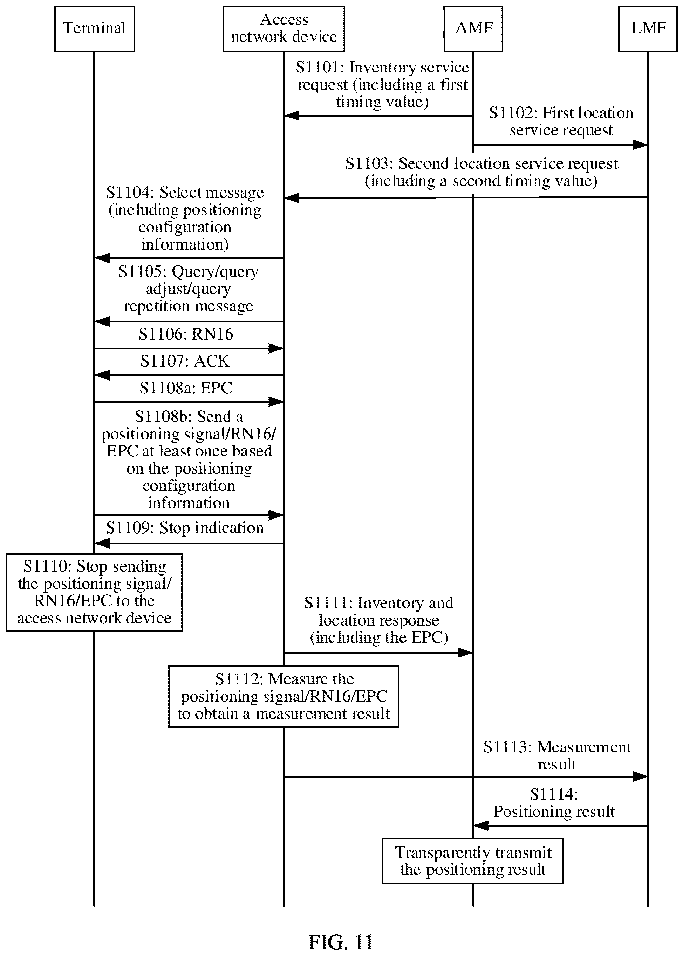

FIG. 11 is a schematic flowchart of still another communication method according to an embodiment of this application. For example, the method may include the following steps.

S1101: An AMF sends an inventory service request to an access network device.

When the AMF needs to perform inventory on a terminal, the AMF may send the inventory service request to the access network device. In this embodiment, an example in which the terminal is a tag is used for description. The inventory service request is used to request to perform inventory on the terminal. Different from an existing inventory service request, the inventory service request includes a first timing value. For example, the first timing value may be set based on experience. For example, the first timing value is several milliseconds (ms), several slots, or several subframes.

S1102: The AMF sends a first location service request to an LMF.

For a specific implementation of this step, refer to step S701 in the embodiment shown in FIG. 7. Details are not described herein again.

S1103: After receiving the first location service request, the LMF sends a second location service request to the access network device.

For a specific implementation of this step, refer to step S702 in the embodiment shown in FIG. 7. A difference is that the second location service request further includes a second timing value. For example, the second timing value may be set based on experience. For example, the second timing value is several milliseconds, several slots, or several subframes.

S1104: The access network device sends a select (select) message to the terminal based on the inventory service request and the second location service request that are received.

For example, an execution sequence between steps S1101, and S1102 and S1103 is not limited. The access network device may first receive the inventory service request, and then receive the second location service request; may first receive the second location service request, and then receive the inventory service request; or may simultaneously receive the inventory service request and the second location service request.

Based on different execution sequences, there may be the following different implementations:

In an implementation, S1101 is performed first, and then S1102 and S1103 are performed. In this case, the first timing value may be set to be greater than the second timing value. After receiving the inventory service request, the access network device starts a first timer, and waits for a period of time; and if receiving the second location service request within the first timing value, the access network device sends a select message to the terminal, where the select message includes positioning configuration information, in other words, initiates inventory and location to the terminal; or if the access network device does not receive the second location service request after the first timer expires, the access network device sends a select message to the terminal, where the select message does not include positioning configuration information, in other words, initiates only inventory to the terminal.

In another implementation, S1102 and S1103 are performed first, and then S1101 is performed. In this case, the second timing value may be set to be greater than the first timing value. After receiving the second location service request, the access network device starts a second timer, and waits for a period of time; and if receiving the inventory service request within the second timing value, the access network device sends a select message to the terminal, where the select message includes positioning configuration information, in other words, initiates inventory and location to the terminal; or if the access network device does not receive the inventory service request after the second timer expires, the access network device returns a failure message to the LMF, or triggers positioning signal-based positioning.

In still another implementation, if S1101, and S1102 and S1103 are simultaneously performed, the first timing value and the second timing value may not be set. When receiving the inventory service request and the second location service request, the access network device sends a select message to the terminal, where the select message includes positioning configuration information, in other words, initiates inventory and location to the terminal.

For a specific implementation in which the access network device sends the select message to the terminal, refer to step S704 in the embodiment shown in FIG. 7.

S1105: The access network device sends a query (Query)/query adjust (QueryAdjust)/query repetition (QueryRep) message to the terminal.

S1106: If a slot counter generated by the terminal is 0, the terminal feeds back an RN16; otherwise, the terminal provides no feedback.

S1107: The access network device sends an ACK to the terminal, where the ACK includes the same RN 16.

S1108a: The terminal compares the RN 16 fed back by the terminal with the RN 16 sent by the access network device in step S1106. If the two RN16 match, the terminal feeds back an EPC; otherwise, the terminal provides no feedback.

S1108b: After receiving the select message, the terminal sends a positioning signal/RN16/EPC to the access network device at least once based on the positioning configuration information.

S1109: The access network device sends a stop indication to the terminal.

The stop indication indicates the terminal to stop sending the positioning signal.

S1110: The terminal stops sending the positioning signal/RN16/EPC to the access network device.

S1111: The access network device sends an inventory and location response to the AMF.

The inventory and location response includes the EPC.

S1112: After receiving the at least one positioning signal/RN16/EPC, the access network device measures the positioning signal/RN16/EPC to obtain a measurement result.

S1113: The access network device sends the measurement result to the LMF.

S1114: After receiving the measurement result, the LMF calculates a positioning result based on the measurement result, and sends the positioning result to the AMF.

For a specific implementation of steps S1105 to S1114, refer to related descriptions of steps S705 to S714 in the embodiment shown in FIG. 7. Details are not described herein again.

According to the communication method provided in this embodiment of this application, an inventory procedure is reused, and additional positioning is performed, in other words, inventory signaling may be reused for positioning. After sending the EPC, the terminal may repeatedly send the location sequence/RN16/EPC/uplink data/random access request/user identifier based on the positioning configuration information, to improve positioning accuracy. The positioning configuration information may be carried in the select message, the query message, the query adjust message, or the query repetition message.

The timing values are respectively carried in the inventory service request and the second location service request, so that when receiving the inventory service request and the second location service request within the particular duration, the access network device initiates inventory and location, to reduce signaling overheads, and implement positioning by reusing the inventory procedure.

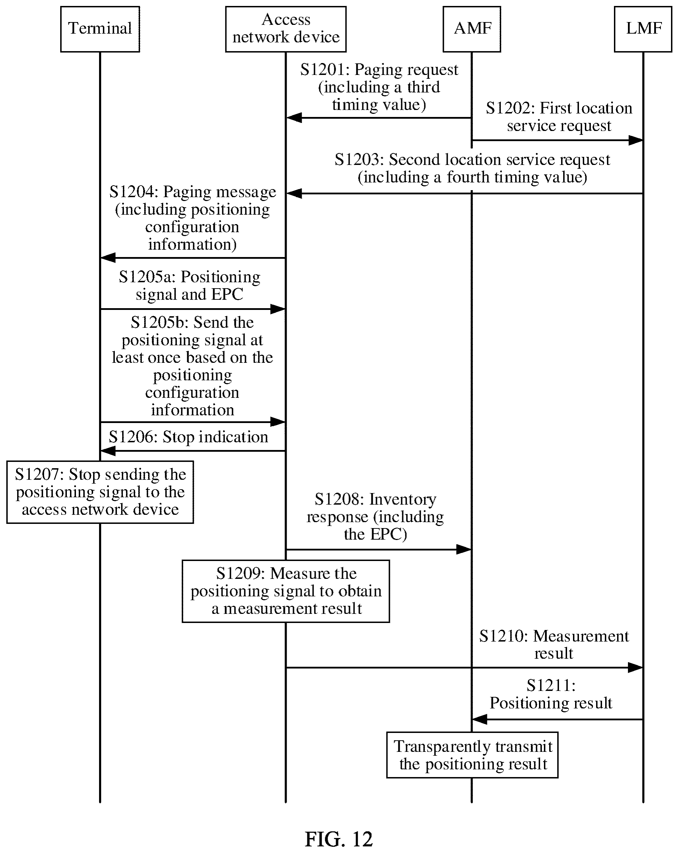

FIG. 12 is a schematic flowchart of still another communication method according to an embodiment of this application. For example, the method may include the following steps.

S1201: An AMF sends a paging request to an access network device.

When the AMF needs to page a terminal, the AMF may send the paging request to the access network device. In this embodiment, an example in which the terminal is a tag is used for description. The paging request is used to request to page the terminal. Different from an existing paging request, the paging request includes a third timing value. For example, the third timing value may be set based on experience. For example, the third timing value is several milliseconds, several slots, or several subframes.

S1202: The AMF sends a first location service request to an LMF.

For a specific implementation of this step, refer to step S801 in the embodiment shown in FIG. 8. Details are not described herein again.

S1203: After receiving the first location service request, the LMF sends a second location service request to the access network device.

For a specific implementation of this step, refer to step S802 in the embodiment shown in FIG. 8. A difference is that the second location service request further includes a fourth timing value. For example, the fourth timing value may be set based on experience. For example, the fourth timing value is several milliseconds, several slots, or several subframes.

S1204: After receiving the second location service request, the access network device sends a paging message to the terminal.

For example, an execution sequence between steps S1201, and S1202 and S1203 is not limited. The access network device may first receive the paging request, and then receive the second location service request; may first receive the second location service request, and then receive the paging request; or may simultaneously receive the paging request and the second location service request.

Based on different execution sequences, there may be the following different implementations:

In an implementation, S1201 is performed first, and then S1202 and S1203 are performed. In this case, the third timing value may be set to be greater than the fourth timing value. After receiving the paging request, the access network device starts a third timer, and waits for a period of time; and if receiving the second location service request within the third timing value, the access network device sends a select message to the terminal, where the select message includes positioning configuration information, in other words, initiates paging and location to the terminal; or if the access network device does not receive the second location service request after the third timer expires, the access network device sends a select message to the terminal, where the select message does not include positioning configuration information, in other words, initiates only paging to the terminal.

In another implementation, S1202 and S1203 are performed first, and then S1201 is performed. In this case, the fourth timing value may be set to be greater than the third timing value. After receiving the second location service request, the access network device starts a fourth timer, and waits for a period of time; and if receiving the paging request within the fourth timing value, the access network device sends a select message to the terminal, where the select message includes positioning configuration information, in other words, initiates paging and location are to the terminal; or if the access network device does not receive the paging request after the fourth timer expires, the access network device returns a failure message to the LMF, or triggers positioning signal-based positioning.

In still another implementation, if S1201, and S1202 and S1203 are simultaneously performed, the third timing value and the fourth timing value may not be set. When receiving the paging request and the second location service request, the access network device sends a select message to the terminal, where the select message includes positioning configuration information, in other words, initiates paging and location to the terminal.

For a specific implementation in which the access network device sends the paging message to the terminal, refer to step S804 in the embodiment shown in FIG. 8.

S1205a: After receiving the paging message, the terminal sends a positioning signal and an EPC to the access network device.

The positioning signal may be at least one of the following: a location sequence, an identifier of the terminal, and an RN 16.

S1205b: The terminal sends the positioning signal to the access network device at least once based on the positioning configuration information.

S1206: The access network device sends a stop indication to the terminal.

The stop indication indicates the terminal to stop sending the positioning signal.

S1207: The terminal stops sending the positioning signal to the access network device.

S1208: The access network device sends a paging response to the AMF.

The paging response includes the EPC.

S1209: After receiving the at least one positioning signal, the access network device measures the positioning signal to obtain a measurement result.

S1210: The access network device sends the measurement result to the LMF.

S1211: After receiving the measurement result, the LMF calculates a positioning result based on the measurement result, and sends the positioning result to the AMF.

The AMF transparently transmits the positioning result.

For a specific implementation of steps S1205a to S1211, refer to related descriptions of steps S805a to S811 in the embodiment shown in FIG. 8. Details are not described herein again.

According to the communication method provided in this embodiment of this application, a paging procedure is reused, and additional positioning is performed, in other words, paging signaling may be reused for positioning. After sending the EPC, the terminal may repeatedly send the location sequence/RN16/EPC/user identifier based on positioning configuration information, to improve positioning accuracy. The positioning configuration information may be carried in the paging message.

The timing values are respectively carried in the paging request and the second location service request, so that when receiving the paging request and the second location service request within the particular duration, the access network device initiates paging and location, to reduce signaling overheads, and implement positioning by reusing the paging procedure.

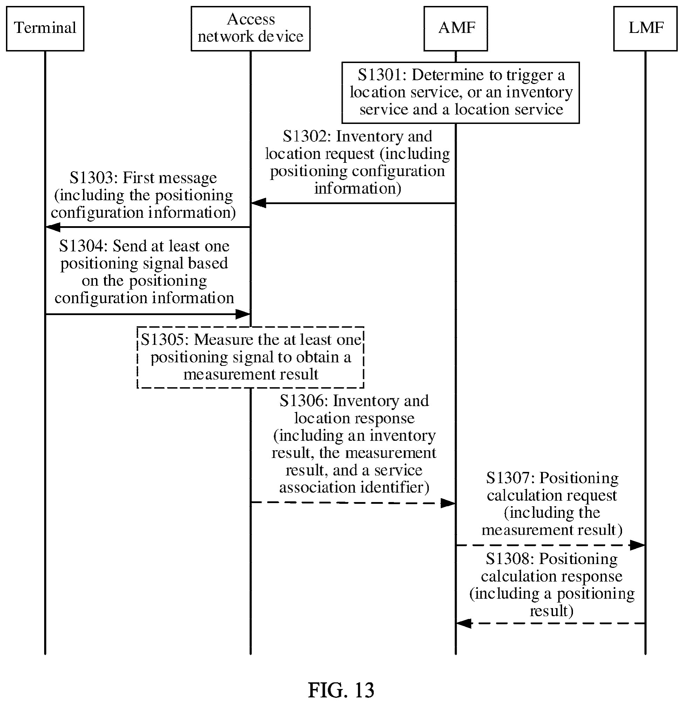

FIG. 13 is a schematic flowchart of still another communication method according to an embodiment of this application. For example, the method may include the following steps.

S1301: An AMF determines to trigger a location service, or an inventory service and a location service.

When determining to perform inventory on a tag, the AMF receives a location service request from a terminal or an external network, or the AMF determines to perform positioning; or when the AMF determines to perform the location service and the inventory service on a tag, the AMF determines to trigger the location service, or the inventory service and the location service. It may be understood that, the tag does not support a complex design, and an inventory procedure needs to be reused. Therefore, when the AMF only determines to trigger the location service, a subsequent procedure may also be performed.

For example, the inventory service may alternatively be replaced with another service, for example, a paging service or a sensing service.

S1302: The AMF sends an inventory and location request to an access network device.

When determining to trigger the location service, or the inventory service and the location service, the AMF sends the inventory and location request to the access network device. The inventory and location request is used to request to perform the location service, or the inventory service and the location service. The inventory and location request includes positioning configuration information. For a meaning of the positioning configuration information, refer to the foregoing descriptions.

The inventory and location request may further include indication information. For example, the indication information may be a service association identifier, and the service association identifier indicates that the inventory service is associated with the location service.

S1303: After receiving the inventory and location request, the access network device sends a first message to the terminal.

In this embodiment, an example in which the terminal is a tag is used. After receiving the inventory and location request, the access network device learns that inventory and location need to be performed on the terminal. The tag does not support a complex design and does not support complex signaling exchanging. Therefore, in this embodiment, an existing procedure of the tag may be reused for positioning, and no new signaling is introduced at an air interface side. Therefore, the access network device sends the first message to the terminal. The first message is at least one of the following messages: a select message, a paging message, a query message, a random access response, a beacon (Beacon), a system message, a synchronization message, a location sequence, or an excitation message.

The first message includes positioning configuration information. The positioning configuration information includes at least one of the following information: a sending periodicity of a positioning signal, a quantity of times of sending the positioning signal, a positioning signal type, a sending time period of the positioning signal, a sending time offset value of the positioning signal, a sending frequency of the positioning signal, and an absolute time point for sending the positioning signal. The sending periodicity of the positioning signal is a time interval for sending the positioning signal. The quantity of times of sending the positioning signal is a quantity of sending times of the positioning signal. For example, in uplink positioning, the positioning signal type includes at least one of the following: a location sequence, a 16-bit random number (namely, an RN 16), an EPC, uplink data, a random access request, and a user identifier. The user identifier is an identifier of the terminal.

The first message may further include a measurement quantity. An uplink signal measurement-based positioning procedure is used as an example. The measurement quantity refers to a parameter that is required by the access network device to perform positioning measurement, and is related to a positioning technology specifically used by an LMF. For example, if the positioning technology used by the LMF is UL-AoA positioning, the measurement quantity includes an uplink angle of arrival of the terminal.

S1304: After receiving the first message, the terminal sends at least one positioning signal to the access network device based on the positioning configuration information.

For a specific implementation of this step, refer to step S605 in the embodiment shown in FIG. 6. Details are not described herein again.

Further, the method may further include the following steps (represented by dashed lines in the figure).

S1305: The access network device measures the at least one positioning signal to obtain a measurement result.

For a specific implementation of this step, refer to step S606 in the embodiment shown in FIG. 6. Details are not described herein again.

S1306: The access network device sends an inventory and location response to the AMF.

After receiving an inventory result from the terminal and the measurement result, the access network device sends the inventory and location response to the AMF. The inventory and location response is a response to the inventory and location request. The inventory and location response includes the inventory result, the measurement result, and the service association identifier.

S1307: The AMF sends a positioning calculation request to the LMF.

After receiving the inventory and location response, the AMF obtains the measurement result carried in the inventory and location response, and sends the positioning calculation request to the LMF. The positioning calculation request includes the measurement result.

S1308: After receiving the positioning calculation request, the LMF sends a positioning calculation response to the AMF.

After receiving the positioning calculation request, the LMF may calculate the received measurement result based on the used positioning technology, to obtain a positioning result, and send the positioning calculation response to the AMF. The positioning calculation response includes the positioning result.

As described above, the terminal or the external network may initiate an inventory service request and a location service request to the AMF. After receiving the positioning result, the AMF may transparently transmit the positioning result to the terminal or the external network.

If the AMF initiates an inventory service request and a location service request, the AMF stores the positioning result.

According to the communication method provided in this embodiment of this application, when determining to trigger an inventory and location procedure, the AMF sends the inventory and location request to the access network device, and the access network device reuses the existing procedure of the low-capability terminal, and sends the first message to the low-capability terminal, so that the low-capability terminal sends the positioning signal to an access network side based on the positioning configuration information, to position the low-capability terminal.

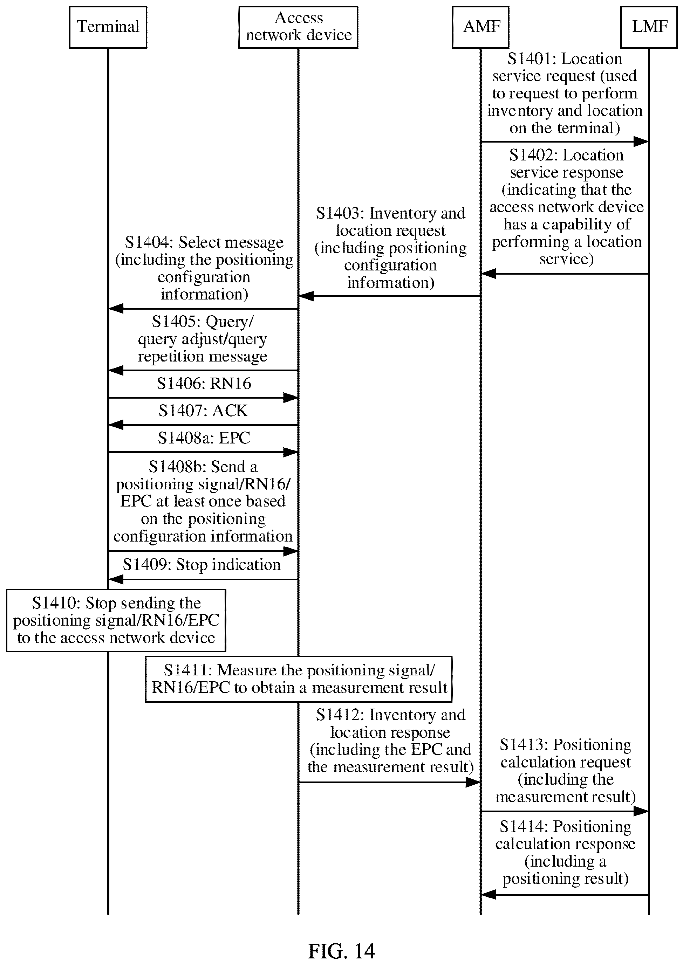

FIG. 14 is a schematic flowchart of still another communication method according to an embodiment of this application. For example, the method may include the following steps.

S1401: An AMF sends a location service request to an LMF.

**In** this embodiment, when the AMF receives an inventory service request and a location service request from a terminal or an external network (for example, the foregoing LCS client or A-IoT private network element), or when the AMF initiates an inventory service and a location service, the AMF sends the location service request to the LMF, where the location service request is used to request to perform the location service, or the location service and the inventory service on the terminal. It may be understood that, a tag does not support a complex design, and an inventory procedure needs to be reused. Therefore, when the location service request is used to request only the location service, a subsequent procedure may also be performed.

The location service request may include first indication information, where the first indication information indicates that the location service is associated with the inventory service.

For example, the inventory service may alternatively be replaced with another service, for example, a paging service or a sensing service.

The location service request may include a first location service identifier. The first location service identifier identifies the inventory service and the location service.

S1402: The LMF sends a location service response to the AMF.

After receiving the location service request, the LMF determines whether an access network device has a positioning capability, to be specific, determines that the access network device can accurately measure a positioning signal. The LMF sends the location service response to the AMF, where the location service response indicates that the access network device has a capability of performing the location service; or the location service response indicates that the access network device does not have a capability of performing the location service; in this case, the procedure ends, or the AMF initiates only the inventory service.

The location service response may include the first location service identifier.

S1403: After receiving the location service response, the AMF sends an inventory and location request to the access network device.

When determining that inventory and location can be triggered, the AMF sends the inventory and location request to the access network device. The inventory and location request is used to request to perform inventory and location on a tag. The inventory and location request includes positioning configuration information. For a meaning of the positioning configuration information, refer to the foregoing descriptions.

The inventory and location request may further include indication information. For example, the indication information may be a service association identifier, and the service association identifier indicates that the inventory service is associated with the location service.

S1404: After receiving the inventory and location request, the access network device sends a select (select) message to the terminal.

In this embodiment, an example in which the terminal is a tag is used. After receiving the inventory and location service request, the access network device learns that inventory and location need to be performed on the terminal. The tag does not support a complex design and does not support complex signaling exchanging, and an existing service of the tag is mainly inventory. Therefore, in this embodiment, an inventory procedure may be reused for positioning, and no new signaling is introduced at an air interface side.

For example, the access network device may send a select message to the terminal, and include positioning configuration information in the select message. For a meaning of the positioning configuration information, refer to the foregoing descriptions.

S1405: The access network device sends a query (Query)/query adjust (QueryAdjust)/query repetition (QueryRep) message to the terminal.

S1406: If a slot counter generated by the terminal is 0, the terminal feeds back an RN 16; otherwise, the terminal provides no feedback.

S1407: The access network device sends an ACK to the terminal, where the ACK includes the same RN 16.

S1408a: The terminal compares the RN 16 fed back by the terminal with the RN 16 sent by the access network device in step S1406. If the two RN16 match, the terminal feeds back an EPC; otherwise, the terminal provides no feedback.

S1408b: After receiving the select message, the terminal sends a positioning signal/RN16/EPC to the access network device at least once based on the positioning configuration information.

S1409: The access network device sends a stop indication to the terminal.

The stop indication indicates the terminal to stop sending the positioning signal.

S1410: The terminal stops sending the positioning signal/RN16/EPC to the access network device.

S1411: The access network device measures the positioning signal/RN16/EPC to obtain a measurement result.

For a specific implementation of steps S1405 to S1411, refer to steps S705 to S710 and S712 in the embodiment shown in FIG. 7. Details are not described herein again.

S1412: The access network device sends an inventory and location response to the AMF.

After receiving an inventory result from the terminal and the measurement result, the access network device sends the inventory and location response to the AMF. The inventory and location response is a response to the inventory and location request. The inventory and location response includes the inventory result, the measurement result, the service association identifier, and an identifier of the access network device.

In addition, in some scenarios, the AMF may receive inventory and location responses from a plurality of access network devices, and the inventory and location responses include a plurality of inventory results and a plurality of measurement results. The plurality of measurement results may be a plurality of results of measurement performed by the plurality of access network devices on a same tag, or may be a plurality of results of measurement performed by the plurality of access network devices on a plurality of tags.

S1413: After receiving the inventory and location response, the AMF sends a positioning calculation request to the LMF.

After receiving the inventory and location response, the AMF obtains the measurement result carried in the inventory and location response, and sends the positioning calculation request to the LMF. The positioning calculation request includes the measurement result and the first location service identifier.

As described above, the inventory and location response may include a plurality of measurement results. In this case, when the AMF sends the positioning calculation request to the LMF, the positioning calculation request includes identifiers of a plurality of access network devices and a plurality of measurement results corresponding to the identifiers of the plurality of access network devices.

In addition, because the measurement results in the inventory and location response correspond one-to-one to inventory results (for example, EPCs), when the plurality of measurement results are a plurality of results of measurement performed by the plurality of access network devices on a plurality of tags, or when the AMF sends the positioning calculation request to the LMF, the positioning calculation request includes a plurality of EPCs and a plurality of measurement results corresponding to the plurality of EPCs.

S1414: After receiving the positioning calculation request, the LMF calculates the measurement result to obtain a positioning result, and sends a positioning calculation response to the AMF.

After receiving the positioning calculation request, the LMF may calculate the received measurement result based on a used positioning technology, to obtain the positioning result, and send the positioning calculation response to the AMF. The positioning calculation response includes the positioning result.

In addition, when the positioning calculation request includes identifiers of a plurality of access network devices and a plurality of measurement results corresponding to the identifiers of the plurality of access network devices, and the plurality of measurement results are a plurality of results of measurement performed by the plurality of access network devices on a plurality of tags, the LMF separately calculates the plurality of measurement results for the plurality of tags, to obtain positioning results of the plurality of tags. In addition, the LMF sends a positioning calculation response to the AMF, where the positioning calculation response includes the identifiers of the plurality of access network devices and the plurality of positioning results corresponding to the identifiers of the plurality of access network devices.

When the positioning calculation request includes identifiers of a plurality of access network devices and a plurality of measurement results corresponding to the identifiers of the plurality of access network devices, and the plurality of measurement results are a plurality of results of measurement performed by the plurality of access network devices on one tag, the LMF jointly calculates the plurality of measurement results for the tag, to obtain a positioning result of the tag. In addition, the LMF sends a positioning calculation response to the AMF. The positioning calculation response includes the identifiers of the plurality of access network devices and the positioning result corresponding to the identifiers of the plurality of access network devices.

When the positioning calculation request includes a plurality of EPCs and a plurality of measurement results corresponding to the plurality of EPCs, and the plurality of measurement results are a plurality of results of measurement performed by a plurality of access network devices on a plurality of tags, the LMF separately calculates the plurality of measurement results for the plurality of tags, to obtain positioning results of the plurality of tags. In addition, the LMF sends a positioning calculation response to the AMF, where the positioning calculation response includes the plurality of EPCs and the plurality of positioning results corresponding to the plurality of EPCs.

When the positioning calculation request includes a plurality of EPCs and a plurality of measurement results corresponding to the plurality of EPCs, and the plurality of measurement results are a plurality of results of measurement performed by a plurality of access network devices on one tag, the LMF jointly calculates the plurality of measurement results for the tag, to obtain a positioning result of the tag. In addition, the LMF sends a positioning calculation response to the AMF, where the positioning calculation response includes the plurality of EPCs and the positioning result corresponding to the plurality of EPCs.

When the positioning response does not include identification information that can identify the terminal, the LMF may perform calculation by using the measurement result, to obtain a positioning result of a single tag or a group tag, so as to determine location information of the single tag or the group tag.

For example, the EPC may alternatively be replaced with other information that identifies the terminal, for example, an identifier of the terminal.

As described above, the terminal or the external network may initiate an inventory service request and a location service request to the AMF. After receiving the positioning result, the AMF may transparently transmit the positioning result to the terminal or the external network.

If the AMF initiates an inventory service request and a location service request, the AMF stores the positioning result.

According to the communication method provided in this embodiment of this application, when receiving the location service response from the LMF and determining that the access network device has the capability of performing the location service, the AMF sends the inventory and location request to the access network device, and the access network device reuses an existing procedure of the low-capability terminal, and sends a first message to the low-capability terminal, so that the low-capability terminal sends the positioning signal to an access network side based on the positioning configuration information, to position the low-capability terminal.

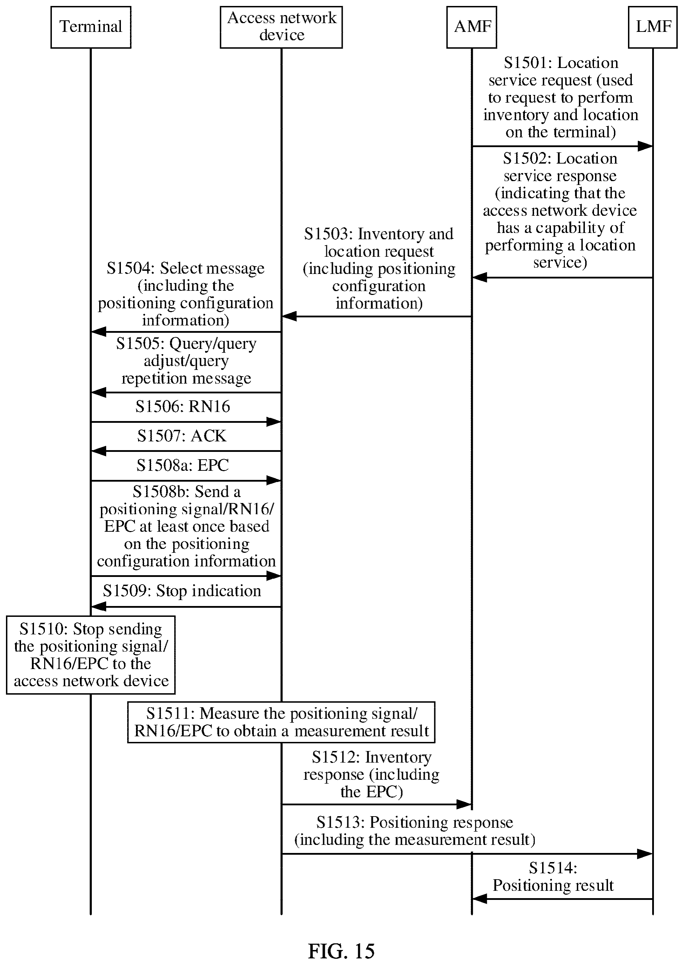

FIG. 15 is a schematic flowchart of still another communication method according to an embodiment of this application. For example, the method may include the following steps.

S1501: An AMF sends a location service request to an LMF.

For a specific implementation of this step, refer to step S1401 in the embodiment shown in FIG. 14, where the location service request is used to request to perform inventory and location on a terminal.

S1502: The LMF sends a location service response to the AMF.

For a specific implementation of this step, refer to step S1402 in the embodiment shown in FIG. 14, where the location service response indicates that an access network device has a capability of performing a location service.

S1503: After receiving the location service response, the AMF sends an inventory and location request to the access network device.

For a specific implementation of this step, refer to step S1403 in the embodiment shown in FIG. 14, where the inventory and location request includes positioning configuration information.

S1504: After receiving the inventory and location request, the access network device sends a select (select) message to the terminal.

For a specific implementation of this step, refer to step S1404 in the embodiment shown in FIG. 14, where the select message includes the positioning configuration information.

S1505: The access network device sends a query (Query)/query adjust (QueryAdjust)/query repetition (QueryRep) message to the terminal.

S1506: If a slot counter generated by the terminal is 0, the terminal feeds back an RN16; otherwise, the terminal provides no feedback.

S1507: The access network device sends an ACK to the terminal, where the ACK includes the same RN 16.

S1508a: The terminal compares the RN 16 fed back by the terminal with the RN 16 sent by the access network device in step S1506. If the two RN16 match, the terminal feeds back an EPC; otherwise, the terminal provides no feedback.

S1508b: After receiving the select message, the terminal sends a positioning signal/RN16/EPC to the access network device at least once based on the positioning configuration information.

S1509: The access network device sends a stop indication to the terminal.

The stop indication indicates the terminal to stop sending the positioning signal.

S1510: The terminal stops sending the positioning signal/RN16/EPC to the access network device.

S1511: The access network device measures the positioning signal/RN16/EPC to obtain a measurement result.

For a specific implementation of steps S1505 to S1511, refer to steps S705 to S710 and S712 in the embodiment shown in FIG. 7. Details are not described herein again.

S1512: The access network device sends an inventory response to the AMF.

Different from the embodiment shown in FIG. 14, the access network device sends the inventory response to the AMF, where the inventory response includes the EPC.

S1513: The access network device sends a positioning response to the LMF.

Different from the embodiment shown in FIG. 14, the access network device separately sends the inventory response and the positioning response to the AMF and the LMF. The positioning response includes the measurement result.

In addition, in some scenarios, the LMF may receive positioning responses from a plurality of access network devices, and the positioning responses include a plurality of measurement results. The plurality of measurement results may be a plurality of results of measurement performed by the plurality of access network devices on a same tag, or may be a plurality of results of measurement performed by the plurality of access network devices on a plurality of tags.

S1514: After receiving the positioning response, the LMF calculates the measurement result to obtain a positioning result, and sends the positioning result to the AMF.

After receiving the positioning response, the LMF may calculate the received measurement result based on a used positioning technology, to obtain the positioning result, and send the positioning result to the AMF.

In addition, when the positioning response includes identifiers of a plurality of access network devices and a plurality of measurement results corresponding to the identifiers of the plurality of access network devices, and the plurality of measurement results are a plurality of results of measurement performed by the plurality of access network devices on a plurality of tags, the LMF separately calculates the plurality of measurement results for the plurality of tags, to obtain positioning results of the plurality of tags. In addition, the LMF sends, to the AMF, the identifiers of the plurality of access network devices and the plurality of positioning results corresponding to the identifiers of the plurality of access network devices.

When the positioning response includes identifiers of a plurality of access network devices and a plurality of measurement results corresponding to the identifiers of the plurality of access network devices, and the plurality of measurement results are a plurality of results of measurement performed by the plurality of access network devices on one tag, the LMF jointly calculates the plurality of measurement results for the tag, to obtain a positioning result of the tag. In addition, the LMF sends, to the AMF, the identifiers of the plurality of access network devices and the positioning result corresponding to the identifiers of the plurality of access network devices.

When the positioning response includes a plurality of EPCs and a plurality of measurement results corresponding to the plurality of EPCs, and the plurality of measurement results are a plurality of results of measurement performed by a plurality of access network devices on a plurality of tags, the LMF separately calculates the plurality of measurement results for the plurality of tags, to obtain positioning results of the plurality of tags. In addition, the LMF sends, to the AMF, the plurality of EPCs and the plurality of positioning results corresponding to the plurality of EPCs.

When the positioning response includes a plurality of EPCs and a plurality of measurement results corresponding to the plurality of EPCs, and the plurality of measurement results are a plurality of results of measurement performed by a plurality of access network devices on one tag, the LMF jointly calculates the plurality of measurement results for the tag, to obtain a positioning result of the tag. In addition, the LMF sends, to the AMF, the plurality of EPCs and the positioning result corresponding to the plurality of EPCs.

As described above, the terminal or an external network may initiate an inventory service request and a location service request to the AMF. After receiving the positioning result, the AMF may transparently transmit the positioning result to the terminal or the external network.

If the AMF initiates an inventory service request and a location service request, the AMF stores the positioning result.

According to the communication method provided in this embodiment of this application, when receiving the location service response from the LMF and determining that the access network device has the capability of performing the location service, the AMF sends the inventory and location request to the access network device, and the access network device reuses an existing procedure of the low-capability terminal, and sends a first message to the low-capability terminal, so that the low-capability terminal sends the positioning signal to an access network side based on the positioning configuration information, to position the low-capability terminal.

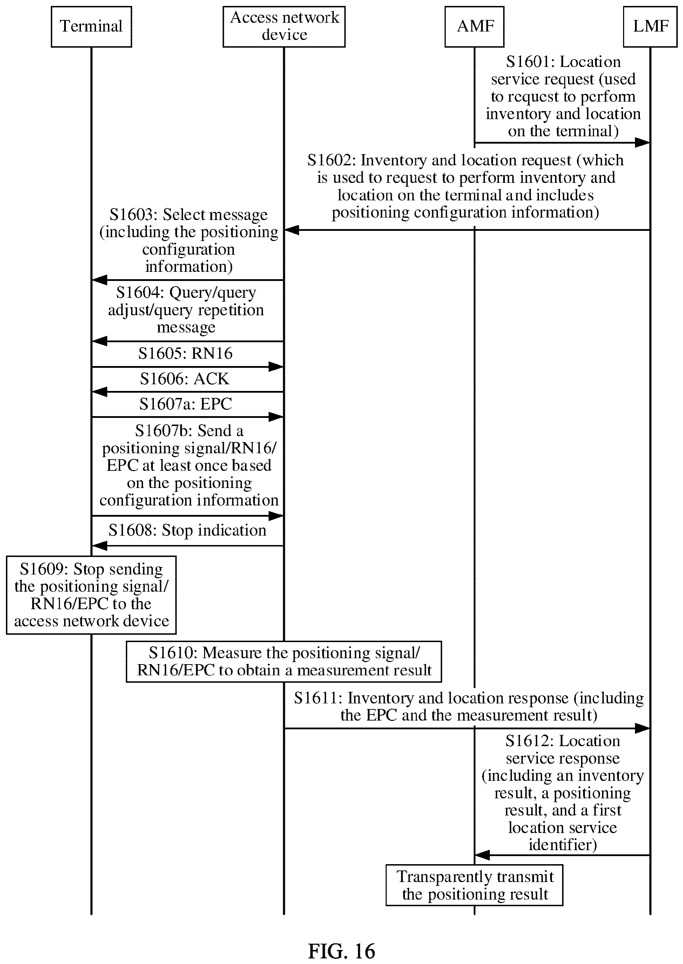

FIG. 16 is a schematic flowchart of still another communication method according to an embodiment of this application. For example, the method may include the following steps.

S1601: An AMF sends a location service request to an LMF.

In this embodiment, when the AMF receives an inventory service request and a location service request from a terminal or an external network (for example, the foregoing LCS client or A-IoT private network element), or when the AMF initiates an inventory service and a location service, the AMF sends the location service request to the LMF. The location service request is used to request to perform inventory and location on the terminal.

The location service request includes a first location service identifier. The first location service identifier indicates that the inventory service is associated with the location service.

S1602: The LMF sends an inventory and location request to an access network device.

When receiving the location service request, the LMF determines to initiate both inventory and location for the terminal. In this case, the LMF sends the inventory and location request to the access network device. The inventory and location request is used to request to perform inventory and location on the terminal. The inventory and location request includes positioning configuration information. For a meaning of the positioning configuration information, refer to the foregoing descriptions. The inventory and location request includes indication information. For example, the indication information may be a service association identifier, and the service association identifier indicates that the inventory service is associated with the location service.

S1603: After receiving the inventory and location request, the access network device sends a select (select) message to the terminal.

The select message includes the positioning configuration information.

S1604: The access network device sends a query (Query)/query adjust (QueryAdjust)/query repetition (QueryRep) message to the terminal.

S1605: If a slot counter generated by the terminal is 0, the terminal feeds back an RN16; otherwise, the terminal provides no feedback.

S1606: The access network device sends an ACK to the terminal, where the ACK includes the same RN 16.

S1607a: The terminal compares the RN 16 fed back by the terminal with the RN 16 sent by the access network device in step S1605. If the two RN16 match, the terminal feeds back an EPC; otherwise, the terminal provides no feedback.

S1607b: After receiving the select message, the terminal sends a positioning signal/RN16/EPC to the access network device at least once based on the positioning configuration information.

S1608: The access network device sends a stop indication to the terminal.

The stop indication indicates the terminal to stop sending the positioning signal.

S1609: The terminal stops sending the positioning signal/RN16/EPC to the access network device.

S1610: The access network device measures the positioning signal/RN16/EPC to obtain a measurement result.

For a specific implementation of steps S1603 to S1610, refer to related descriptions in the embodiments shown in FIG. 13 to FIG. 15. Details are not described herein again.

S1611: The access network device sends an inventory and location response to the LMF.

After receiving an inventory result from the terminal and the measurement result, the access network device sends the inventory and location response to the LMF. The inventory and location response is a response to the inventory and location request. The inventory and location response includes the inventory result (for example, the EPC), the measurement result, and the service association identifier.

In addition, in some scenarios, the LMF may receive inventory and location responses from a plurality of access network devices, and the inventory and location responses include a plurality of inventory results and a plurality of measurement results. The plurality of measurement results may be a plurality of results of measurement performed by the plurality of access network devices on a same tag, or may be a plurality of results of measurement performed by the plurality of access network devices on a plurality of tags.

S1612: After receiving the inventory and location response, the LMF calculates the measurement result to obtain a positioning result, and sends a location service response to the AMF.

After receiving the inventory and location response, the LMF may calculate the received measurement result based on a used positioning technology, to obtain a positioning result, and send the location service response to the AMF, where the location service response includes the positioning result, the inventory result, and the first location service identifier. The location service response is a response to the location service request.

In addition, when the inventory and location response includes identifiers of a plurality of access network devices and a plurality of measurement results corresponding to the identifiers of the plurality of access network devices, and the plurality of measurement results are a plurality of results of measurement performed by the plurality of access network devices on a plurality of tags, the LMF separately calculates the plurality of measurement results for the plurality of tags, to obtain positioning results of the plurality of tags. In addition, the LMF sends a location service response to the AMF, where the location service response includes the inventory result, the identifiers of the plurality of access network devices, and the plurality of positioning results corresponding to the identifiers of the plurality of access network devices.

When the inventory and location response includes identifiers of a plurality of access network devices and a plurality of measurement results corresponding to the identifiers of the plurality of access network devices, and the plurality of measurement results are a plurality of results of measurement performed by the plurality of access network devices on one tag, the LMF jointly calculates the plurality of measurement results for the tag, to obtain a positioning result of the tag. In addition, the LMF sends a location service response to the AMF, where the location service response includes the inventory result, the identifiers of the plurality of access network devices, and the positioning result corresponding to the identifiers of the plurality of access network devices.

When the inventory and location response includes a plurality of EPCs and a plurality of measurement results corresponding to the plurality of EPCs, and the plurality of measurement results are a plurality of results of measurement performed by a plurality of access network devices on a plurality of tags, the LMF separately calculates the plurality of measurement results for the plurality of tags, to obtain positioning results of the plurality of tags. In addition, the LMF sends a location service response to the AMF, where the location service response includes the inventory result, the plurality of EPCs, and the plurality of positioning results corresponding to the plurality of EPCs.

When the inventory and location response includes a plurality of EPCs and a plurality of measurement results corresponding to the plurality of EPCs, and the plurality of measurement results are a plurality of results of measurement performed by a plurality of access network devices on one tag, the LMF jointly calculates the plurality of measurement results for the tag, to obtain a positioning result of the tag. In addition, the LMF sends a location service response to the AMF, where the location service response includes the inventory result, the plurality of EPCs, and the positioning result corresponding to the plurality of EPCs.

As described above, the terminal or the external network may initiate an inventory service request and a location service request to the AMF. After receiving the positioning result, the AMF may transparently transmit the positioning result to the terminal or the external network.

If the AMF initiates an inventory service request and a location service request, the AMF stores the positioning result.

According to the communication method provided in this embodiment of this application, the AMF sends the location service request to the LMF, the LMF sends the inventory and location request to an access network device, and the access network device reuses an existing procedure of the low-capability terminal, and sends a first message to the low-capability terminal, so that the low-capability terminal sends the positioning signal to an access network side based on positioning configuration information, to position the low-capability terminal.

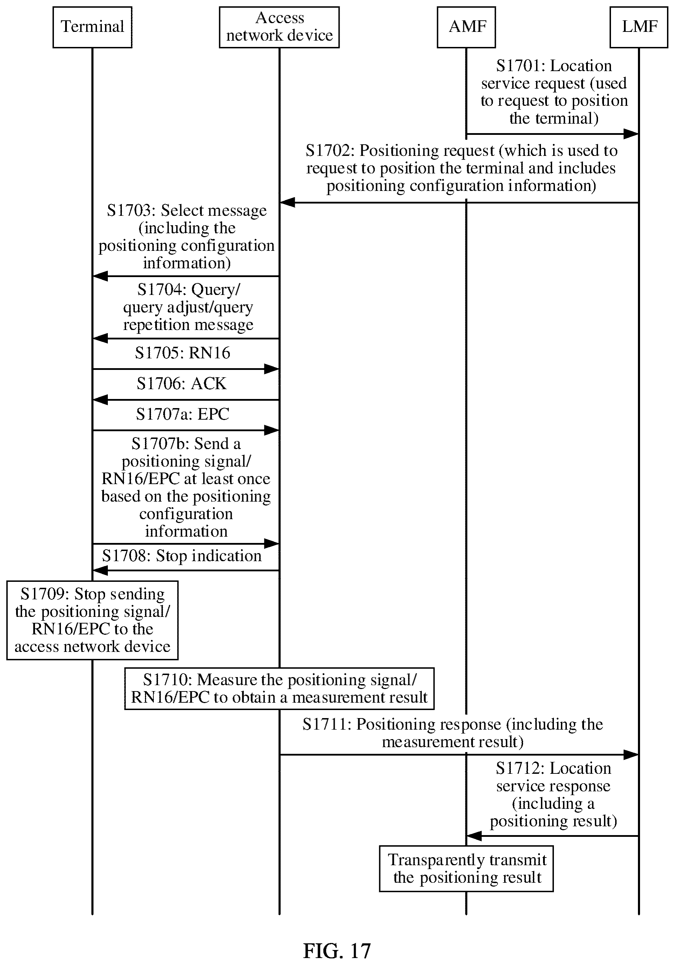

FIG. 17 is a schematic flowchart of still another communication method according to an embodiment of this application. For example, the method may include the following steps.

S1701: An AMF sends a location service request to an LMF.

In this embodiment, when the AMF receives a location service request from a terminal or an external network (for example, the foregoing LCS client or A-IoT private network element), or when the AMF initiates a location service, the AMF sends the location service request to the LMF, where the location service request is used to request to position the terminal.

The location service request includes a first location service identifier. The first location service identifier identifies the location service.

S1702: The LMF sends a positioning request to an access network device.

When receiving the location service request, the LMF determines to initiate positioning only for the terminal. In this case, the LMF sends the positioning request to the access network device. The positioning request is used to request to position the terminal. The positioning request includes positioning configuration information. For a meaning of the positioning configuration information, refer to the foregoing descriptions.

The positioning request includes a service association identifier. The service association identifier identifies the location service.

S1703: After receiving the positioning request, the access network device sends a select (select) message to the terminal.

The select message includes the positioning configuration information.

S1704: The access network device sends a query (Query)/query adjust (QueryAdjust)/query repetition (QueryRep) message to the terminal.

S1705: If a slot counter generated by the terminal is 0, the terminal feeds back an RN16; otherwise, the terminal provides no feedback.

S1706: The access network device sends an ACK to the terminal, where the ACK includes the same RN 16.

S1707a: The terminal compares the RN 16 fed back by the terminal with the RN 16 sent by the access network device in step S1705. If the two RN16 match, the terminal feeds back an EPC; otherwise, the terminal provides no feedback.

S1707b: After receiving the select message, the terminal sends a positioning signal/RN16/EPC to the access network device at least once based on the positioning configuration information.

S1708: The access network device sends a stop indication to the terminal.

The stop indication indicates the terminal to stop sending the positioning signal.

S1709: The terminal stops sending the positioning signal/RN16/EPC to the access network device.

S1710: The access network device measures the positioning signal/RN16/EPC to obtain a measurement result.

For a specific implementation of steps S1703 to S1710, refer to related descriptions in the embodiments shown in FIG. 13 to FIG. 15. Details are not described herein again.

S1711: The access network device sends a positioning response to the LMF.

After receiving a measurement result from the terminal, the access network device sends the positioning response to the LMF. The positioning response is a response to the positioning request. The positioning response includes the measurement result and the service association identifier. The positioning response may further include the EPC.

In an implementation, the access network device may transparently transmit the measurement result to the LMF through the AMF.

In another implementation, the access network device may send the measurement result to the AMF. After the AMF confirms the measurement result, the AMF sends the measurement result to the LMF. In addition, in some scenarios, the LMF may receive positioning responses from a plurality of access network devices, and the positioning responses include a plurality of measurement results. The plurality of measurement results may be a plurality of results of measurement performed by the plurality of access network devices on a same tag, or may be a plurality of results of measurement performed by the plurality of access network devices on a plurality of tags.

S1712: After receiving the positioning response, the LMF calculates the measurement result to obtain a positioning result, and sends a location service response to the AMF.

After receiving the positioning response, the LMF may calculate the received measurement result based on a used positioning technology, to obtain the positioning result, and send the location service response to the AMF, where the location service response includes the positioning result and the first location service identifier. The location service response is a response to the location service request.

In addition, when the positioning response includes identifiers of a plurality of access network devices and a plurality of measurement results corresponding to the identifiers of the plurality of access network devices, and the plurality of measurement results are a plurality of results of measurement performed by the plurality of access network devices on a plurality of tags, the LMF separately calculates the plurality of measurement results for the plurality of tags, to obtain positioning results of the plurality of tags. In addition, the LMF sends a location service response to the AMF, where the location service response includes the identifiers of the plurality of access network devices, and the plurality of positioning results corresponding to the identifiers of the plurality of access network devices.

When the positioning response includes identifiers of a plurality of access network devices and a plurality of measurement results corresponding to the identifiers of the plurality of access network devices, and the plurality of measurement results are a plurality of results of measurement performed by the plurality of access network devices on one tag, the LMF jointly calculates the plurality of measurement results for the tag, to obtain a positioning result of the tag. In addition, the LMF sends a location service response to the AMF, where the location service response includes the identifiers of the plurality of access network devices, and the positioning result corresponding to the identifiers of the plurality of access network devices.

When the positioning response includes a plurality of EPCs and a plurality of measurement results corresponding to the plurality of EPCs, and the plurality of measurement results are a plurality of results of measurement performed by a plurality of access network devices on a plurality of tags, the LMF separately calculates the plurality of measurement results for the plurality of tags, to obtain positioning results of the plurality of tags. In addition, the LMF sends a location service response to the AMF, where the location service response includes the plurality of EPCs, and the plurality of positioning results corresponding to the plurality of EPCs.

When the positioning response includes a plurality of EPCs and a plurality of measurement results corresponding to the plurality of EPCs, and the plurality of measurement results are a plurality of results of measurement performed by a plurality of access network devices on one tag, the LMF jointly calculates the plurality of measurement results for the tag, to obtain a positioning result of the tag. In addition, the LMF sends a location service response to the AMF, where the location service response includes the plurality of EPCs, and the positioning result corresponding to the plurality of EPCs.

When the positioning response does not include identification information that can identify the terminal, the LMF may perform calculation by using the measurement result, to obtain a positioning result of a single tag or a group tag, so as to determine location information of the single tag or the group tag.

For example, the EPC may alternatively be replaced with other information that identifies the terminal, for example, an identifier of the terminal.

As described above, the terminal or the external network may initiate a location service request to the AMF. After receiving the positioning result, the AMF may transparently transmit the positioning result to the terminal or the external network.

If the AMF initiates a location service request, the AMF stores the positioning result.

According to the communication method provided in this embodiment of this application, the AMF sends the location service request to the LMF, where the location service request is used only to request the location service. In this case, the LMF sends the positioning request to the access network device, and the access network device reuses an existing procedure of the low-capability terminal, and sends a first message to the low-capability terminal, so that the low-capability terminal sends the positioning signal to an access network side based on the positioning configuration information, to position the low-capability terminal.

It may be understood that, to implement functions in the foregoing embodiments, the network elements includes corresponding hardware structures and/or corresponding software modules for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraint conditions of the technical solutions.

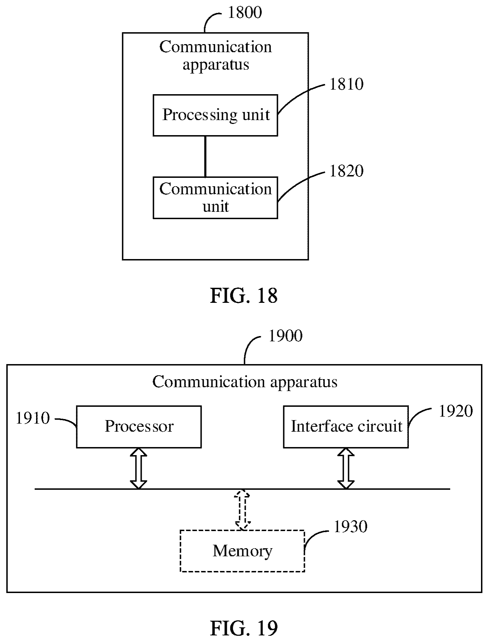

FIG. 18 and FIG. 19 are diagrams of structures of possible communication apparatuses according to embodiments of this application. These communication apparatuses may be configured to implement functions of the network elements in the foregoing method embodiments, and therefore may also implement beneficial effects of the foregoing method embodiments. In embodiments of this application, the communication apparatus may be one of the terminals 120a to 120j shown in FIG. 1, may be the access network device 110a or 110b shown in FIG. 1, may be a device in the core network 200 shown in FIG. 1, or may be a module (for example, a chip) used in a terminal, an access network device, or a core network device.

As shown in FIG. 18, the communication apparatus 1800 includes a processing unit 1810 and a communication unit 1820. The communication apparatus 1800 is configured to implement functions of the terminal, the access network device, the AMF, or the LMF in the method embodiments shown in FIG. 6 to FIG. 17.

When the communication apparatus 1800 is configured to implement the functions of the terminal in the method embodiment shown in FIG. 6, the communication unit 1820 is configured to perform the operations performed by the terminal in steps S604 and S605 in the embodiment shown in FIG. 6.

When the communication apparatus 1800 is configured to implement the functions of the access network device in the method embodiment shown in FIG. 6, the communication unit 1820 is configured to perform the operations performed by the access network device in steps S603 to S605 and S607 in the embodiment shown in FIG. 6, and the processing unit 1810 is configured to perform step S606 in the embodiment shown in FIG. 6.

When the communication apparatus 1800 is configured to implement the functions of the AMF in the method embodiment shown in FIG. 6, the communication unit 1820 is configured to perform the operations performed by the terminal in steps S601 to S603 in the embodiment shown in FIG. 6.

When the communication apparatus 1800 is configured to implement the functions of the LMF in the method embodiment shown in FIG. 6, the communication unit 1820 is configured to perform the operations performed by the LMF in steps S601, S602, and S607 in the embodiment shown in FIG. 6.

For more detailed descriptions of the processing unit 1810 and the communication unit 1820, directly refer to the related descriptions in the method embodiments shown in FIG. 6 to FIG. 17. Details are not described herein again.

As shown in FIG. 19, the communication apparatus 1900 includes a processor 1910 and an interface circuit 1920. The processor 1910 and the interface circuit 1920 are coupled to each other. It may be understood that the interface circuit 1920 may be a transceiver or an input/output interface. Optionally, the communication apparatus 1900 may further include a memory 1930, configured to: store instructions executed by the processor 1910, or store input data required by the processor 1910 to run the instructions, or store data generated after the processor 1910 runs the instructions.

When the communication apparatus 1900 is configured to implement the method shown in FIG. 6 to FIG. 17, the processor 1910 is configured to implement a function of the processing unit 1810, and the interface circuit 1920 is configured to implement a function of the communication unit 1820.

When the communication apparatus is a chip used in a terminal, the chip in the terminal implements the function of the terminal in the foregoing method embodiments. The chip in the terminal receives information from another module (for example, a radio frequency module or an antenna) in the terminal, where the information is sent by an access network device to the terminal. Alternatively, the chip in the terminal sends information to another module (for example, a radio frequency module or an antenna) in the terminal, where the information is sent by the terminal to an access network device or an LMF.

When the communication apparatus is a chip used in an access network device, the chip in the access network device implements the function of the access network device in the foregoing method embodiments. The chip in the access network device receives information from another module (for example, a radio frequency module or an antenna) in the access network device, where the information is sent by a terminal, an AMF, or an LMF to the access network device. Alternatively, the chip in the access network device sends information to another module (for example, a radio frequency module or an antenna) in the access network device, where the information is sent by the access network device to a terminal, an AMF, or an LMF.

When the communication apparatus is a chip used in an AMF, the chip in the AMF implements the function of the AMF in the foregoing method embodiments. The chip in the AMF receives information from another module (for example, a radio frequency module or an antenna) in the AMF, where the information is sent by a terminal, an access network device, or an LMF to the AMF. Alternatively, the chip in the AMF sends information to another module (for example, a radio frequency module or an antenna) in the AMF, where the information is sent by the AMF to a terminal, an access network device, or an LMF.

When the communication apparatus is a chip used in an LMF, the chip in the LMF implements the function of the LMF in the foregoing method embodiments. The chip in the LMF receives information from another module (for example, a radio frequency module or an antenna) in the LMF, where the information is sent by an access network device or an LMF to the LMF. Alternatively, the chip in the LMF sends information to another module (for example, a radio frequency module or an antenna) in the LMF, where the information is sent by the LMF to an access network device or an AMF.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal. Certainly, the processor and the storage medium may alternatively exist in a network device or a terminal as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer program or instructions are loaded and executed on a computer, all or some of the procedures or functions described in embodiments of this application are performed. The computer may be a general-purpose computer, a dedicated computer, a computer network, a network device, a user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

An embodiment of this application provides a communication chip, including a processor and a communication interface. The processor is configured to read instructions or a computer program, to perform the method in embodiments of this application.

An embodiment of this application further provides a computer-readable storage medium. The computer-readable storage medium stores a computer program used for implementing the method in embodiments of this application. When the computer program runs on a computer, the computer is caused to implement the method in the foregoing method embodiments.

An embodiment of this application further provides a computer program product. When the computer program product runs on a computer, the computer is caused to perform the method in embodiments of this application.

An embodiment of this application further provides a communication system, including a first communication apparatus, a second communication apparatus, a third communication apparatus, and a fourth communication apparatus. The first communication apparatus is configured to perform functions of the terminal in the embodiments shown in FIG. 6 to FIG. 8 and FIG. 10 to FIG. 17. The second communication apparatus is configured to perform functions of the access network device in the embodiments shown in FIG. 6 to FIG. 8 and FIG. 10 to FIG. 17. The third communication apparatus is configured to perform functions of the AMF in the embodiments shown in FIG. 6 to FIG. 8 and FIG. 10 to FIG. 17. The fourth communication apparatus is configured to perform functions of the LMF in the embodiments shown in FIG. 6 to FIG. 8 and FIG. 10 to FIG. 17.

An embodiment of this application further provides a communication system, including a fifth communication apparatus, a sixth communication apparatus, and a seventh communication apparatus. The fifth communication apparatus is configured to perform the function of the terminal in the embodiment shown in FIG. 9, the sixth communication apparatus is configured to perform the function of the access network device in the embodiment shown in FIG. 9, and the seventh communication apparatus is configured to perform the function of the inventory and location network element in the embodiment shown in FIG. 9.

An embodiment of this application further provides a communication system, including an eighth communication apparatus, a ninth communication apparatus, and a tenth communication apparatus. The eighth communication apparatus is configured to perform the function of the terminal in the embodiment shown in FIG. 10, the ninth communication apparatus is configured to perform the function of the access network device in the embodiment shown in FIG. 10, and the tenth communication apparatus is configured to perform the function of the paging and location network element in the embodiment shown in FIG. 10.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "At least one of the following: ..." or a similar expression represents any one listed item or a combination of any quantity of items among listed items. For example, "at least one of the following: A, B, and C" or "at least one of the following: A, B, or C" may indicate the following cases: Only A exists, only B exists, only C exists, both A and B exist, both B and C exist, both A and C exist, and A, B, and C exist, where A, B, and C may be in a singular form or a plural form. "And/or" describes an association relationship between associated objects, and indicates that three relationships may exist. For example, A and/or B may indicate the following three cases: Only A exists, both A and B exist, and only B exists, where A and B may be in a singular form or a plural form. In the text descriptions of this application, the character "/" indicates an "or" relationship between associated objects; and in a formula in this application, the character "/" indicates a "division" relationship between associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
receiving a first message from an access network device, wherein the first message comprises positioning configuration information, and the first message is at least one of the following messages: a select message, a paging message, a query message, a random access response, a beacon, a system message, a synchronization message, a location sequence, and an excitation message; and
sending at least one positioning signal to the access network device based on the positioning configuration information.

2. The method according to claim 1, wherein the positioning configuration information comprises at least one of the following information: a sending periodicity of the positioning signal, a quantity of times of sending the positioning signal, a positioning signal type, a sending time period of the positioning signal, a sending time offset value of the positioning signal, a sending frequency of the positioning signal, and an absolute time point for sending the positioning signal.

3. The method according to claim 2, wherein the positioning signal type comprises at least one of the following: a location sequence, a 16-bit random number, an electronic factory code EPC, uplink data, a random access request, and a user identifier.

4. The method according to any one of claims 1 to 3, wherein the method further comprises:
receiving a stop indication from the access network device, wherein the stop indication indicates to stop sending the positioning signal; and
stopping sending the positioning signal to the access network device.

5. A communication method, wherein the method comprises:
sending a first message to a terminal, wherein the first message comprises the positioning configuration information, and the first message is at least one of the following messages: a select message, a paging message, a query message, a random access response, a beacon, a system message, a synchronization message, a location sequence, and an excitation message; and
receiving at least one positioning signal from the terminal based on the positioning configuration information.

6. The method according to claim 5, wherein the method further comprises:
receiving a first service request and a location service request, wherein the first service request is used to request to perform a first service, the location service request is used to request to perform a location service, and the first service comprises at least one of the following services: a paging service, an inventory service, and a sensing service.

7. The method according to claim 6, wherein the first service request and the location service request are comprised in a same message.

8. The method according to any one of claims 5 to 7, wherein the positioning configuration information is from a location management network element, and the positioning configuration information comprises at least one of the following information: a sending periodicity of the positioning signal, a quantity of times of sending the positioning signal, a positioning signal type, a sending time period of the positioning signal, a sending time offset value of the positioning signal, a sending frequency of the positioning signal, and an absolute time point for sending the positioning signal.

9. The method according to any one of claims 5 to 8, wherein the positioning signal comprises at least one of the following: a location sequence, a 16-bit random number, an electronic factory code EPC, uplink data, a random access request, and a user identifier.

10. The method according to claim 9, wherein if the first service is an inventory service, the EPC or the user identifier is used to perform inventory on the terminal.

11. The method according to any one of claims 5 to 10, wherein the method further comprises:
measuring the at least one positioning signal to obtain a measurement result; and
sending the measurement result.

12. The method according to any one of claims 5 to 11, wherein the method further comprises:
sending a stop indication to the terminal, wherein the stop indication indicates to stop sending the positioning signal.

13. A communication method, wherein the method comprises:
sending first indication information to a location management network element, wherein the first indication information indicates that a location service is associated with a first service;
receiving a location service request from the location management network element, wherein the location service request is used to request to perform the location service, and the location service request comprises the first indication information;
sending a first service request and the location service request to an access network device based on the first indication information, wherein the first service request is used to request to perform the first service; and
receiving a positioning result from the location management network element.

14. The method according to claim 13, wherein the first service comprises at least one of the following services: a paging service, an inventory service, and a sensing service.

15. The method according to claim 13 or 14, wherein the positioning result is determined based on a measurement result that is sent by the access network device after the access network device performs measurement.

16. The method according to any one of claims 13 to 15, wherein the first service request and the location service request are in a same message.

17. The method according to any one of claims 13 to 16, wherein the location service request further comprises positioning configuration information; the positioning configuration information comprises at least one of the following information: a sending periodicity of a positioning signal, a quantity of times of sending the positioning signal, a positioning signal type, a sending time period of the positioning signal, a sending time offset value of the positioning signal, a sending frequency of the positioning signal, and an absolute time point for sending the positioning signal; and the positioning signal type comprises at least one of the following: a location sequence, a 16-bit random number, an electronic factory code EPC, uplink data, a random access request, and a user identifier.

18. The method according to claim 17, wherein if the first service is an inventory service, the EPC or the user identifier is used to perform inventory on at least one terminal.

19. A communication method, wherein the method comprises:
receiving first indication information from an access and mobility management network element, wherein the first indication information indicates that a location service is associated with a first service;
sending a location service request to the access and mobility management network element, wherein the location service request is used to request to perform the location service, and the location service request comprises the first indication information; and
receiving a measurement result, wherein the measurement result is obtained by measuring at least one positioning signal received from a terminal.

20. The method according to claim 19, wherein the first service comprises at least one of the following services: a paging service, an inventory service, and a sensing service.

21. The method according to claim 19 or 20, wherein the method further comprises:
generating a positioning result based on the measurement result; and
sending the positioning result to the access and mobility management network element.

22. The method according to any one of claims 19 to 21, wherein the location service request further comprises positioning configuration information; the positioning configuration information comprises at least one of the following information: a sending periodicity of the positioning signal, a quantity of times of sending the positioning signal, a positioning signal type, a sending time period of the positioning signal, a sending time offset value of the positioning signal, a sending frequency of the positioning signal, and an absolute time point for sending the positioning signal; and the positioning signal type comprises at least one of the following: a location sequence, a 16-bit random number, an electronic factory code EPC, uplink data, a random access request, and a user identifier.

23. A communication apparatus, wherein the apparatus comprises a communication unit, wherein
the communication unit is configured to receive a first message from an access network device, wherein the first message comprises positioning configuration information, and the first message is at least one of the following messages: a select message, a paging message, a query message, a random access response, a beacon, a system message, a synchronization message, a location sequence, and an excitation message; and
the communication unit is further configured to send at least one positioning signal to the access network device based on the positioning configuration information.

24. The apparatus according to claim 23, wherein the positioning configuration information comprises at least one of the following information: a sending periodicity of the positioning signal, a quantity of times of sending the positioning signal, a positioning signal type, a sending time period of the positioning signal, a sending time offset value of the positioning signal, a sending frequency of the positioning signal, and an absolute time point for sending the positioning signal.

25. The apparatus according to claim 24, wherein the positioning signal type comprises at least one of the following: a location sequence, a 16-bit random number, an electronic factory code EPC, uplink data, a random access request, and a user identifier.

26. The apparatus according to any one of claims 23 to 25, wherein the apparatus further comprises a processing unit, wherein
the communication unit is further configured to receive a stop indication from the access network device, wherein the stop indication indicates to stop sending the positioning signal; and
the processing unit is configured to control the communication unit to stop sending the positioning signal to the access network device.

27. A communication apparatus, wherein the apparatus comprises a communication unit, wherein
the communication unit is configured to send a first message to a terminal, wherein the first message comprises the positioning configuration information, and the first message is at least one of the following messages: a select message, a paging message, a query message, a random access response, a beacon, a system message, a synchronization message, a location sequence, and an excitation message; and
the communication unit is further configured to receive at least one positioning signal from the terminal based on the positioning configuration information.

28. The apparatus according to claim 27, wherein the communication unit is further configured to receive a first service request and a location service request, wherein the first service request is used to request to perform a first service, the location service request is used to request to perform a location service, and the first service comprises at least one of the following services: a paging service, an inventory service, and a sensing service.

29. The apparatus according to claim 28, wherein the first service request and the location service request are comprised in a same message.

30. The apparatus according to any one of claims 27 to 29, wherein the positioning configuration information is from a location management network element, and the positioning configuration information comprises at least one of the following information: a sending periodicity of the positioning signal, a quantity of times of sending the positioning signal, a positioning signal type, a sending time period of the positioning signal, a sending time offset value of the positioning signal, a sending frequency of the positioning signal, and an absolute time point for sending the positioning signal.

31. The apparatus according to any one of claims 27 to 30, wherein the positioning signal comprises at least one of the following: a location sequence, a 16-bit random number, an electronic factory code EPC, uplink data, a random access request, and a user identifier.

32. The apparatus according to claim 31, wherein if the first service is an inventory service, the EPC or the user identifier is used to perform inventory on the terminal.

33. The apparatus according to any one of claims 27 to 32, wherein the apparatus further comprises a processing unit, wherein
the processing unit is configured to measure the at least one positioning signal to obtain a measurement result; and
the communication unit is further configured to send the measurement result.

34. The apparatus according to any one of claims 27 to 33, wherein the communication unit is further configured to send a stop indication to the terminal, wherein the stop indication indicates to stop sending the positioning signal.

35. A communication apparatus, wherein the apparatus comprises a communication unit and a processing unit, wherein
the communication unit is configured to send first indication information to a location management network element, wherein the first indication information indicates that a location service is associated with a first service;
the communication unit is further configured to receive a location service request from the location management network element, wherein the location service request is used to request to perform the location service, and the location service request comprises the first indication information;
the communication unit is further configured to send a first service request and the location service request to an access network device based on the first indication information, wherein the first service request is used to request to perform the first service; and
the communication unit is further configured to receive a positioning result from the location management network element.

36. The apparatus according to claim 35, wherein the first service comprises at least one of the following services: a paging service, an inventory service, and a sensing service.

37. The apparatus according to claim 35 or 36, wherein the positioning result is determined based on a measurement result that is sent by the access network device after the access network device performs positioning measurement.

38. The apparatus according to any one of claims 35 to 37, wherein the first service request and the location service request are in a same message.

39. The apparatus according to any one of claims 35 to 38, wherein the location service request further comprises positioning configuration information; the positioning configuration information comprises at least one of the following information: a sending periodicity of a positioning signal, a quantity of times of sending the positioning signal, a positioning signal type, a sending time period of the positioning signal, a sending time offset value of the positioning signal, a sending frequency of the positioning signal, and an absolute time point for sending the positioning signal; and the positioning signal type comprises at least one of the following: a location sequence, a 16-bit random number, an electronic factory code EPC, uplink data, a random access request, and a user identifier.

40. The apparatus according to claim 39, wherein if the first service is an inventory service, the EPC or the user identifier is used to perform inventory on at least one terminal.

41. A communication apparatus, wherein the apparatus comprises a communication unit, wherein
the communication unit is configured to receive first indication information from an access and mobility management network element, wherein the first indication information indicates that a location service is associated with a first service;
the communication unit is further configured to send a location service request to the access and mobility management network element, wherein the location service request is used to request to perform the location service, and the location service request comprises the first indication information; and
the communication unit is further configured to receive a measurement result, wherein the measurement result is obtained by measuring at least one positioning signal received from a terminal.

42. The apparatus according to claim 41, wherein the first service comprises at least one of the following services: a paging service, an inventory service, and a sensing service.

43. The apparatus according to claim 41 or 42, wherein the apparatus further comprises a processing unit, wherein
the processing unit is configured to generate a positioning result based on the measurement result; and
the communication unit is further configured to send the positioning result to the access and mobility management network element.

44. The apparatus according to any one of claims 41 to 43, wherein the location service request further comprises positioning configuration information; the positioning configuration information comprises at least one of the following information: a sending periodicity of the positioning signal, a quantity of times of sending the positioning signal, a positioning signal type, a sending time period of the positioning signal, a sending time offset value of the positioning signal, a sending frequency of the positioning signal, and an absolute time point for sending the positioning signal; and the positioning signal type comprises at least one of the following: a location sequence, a 16-bit random number, an electronic factory code EPC, uplink data, a random access request, and a user identifier.

45. A communication system, comprising the communication apparatus according to any one of claims 23 to 26, the communication apparatus according to any one of claims 27 to 34, the communication apparatus according to any one of claims 35 to 40, and the communication apparatus according to any one of claims 41 to 44.

46. A communication apparatus, comprising a processor and a storage medium, wherein the storage medium stores instructions; and when the instructions are run by the processor, the method according to any one of claims 1 to 4 is implemented, the method according to any one of claims 5 to 12 is implemented, the method according to any one of claims 13 to 18 is implemented, or the method according to any one of claims 19 to 22 is implemented.

47. A computer-readable storage medium, wherein the computer-readable storage medium comprises instructions; and when the instructions are run by a processor, the method according to any one of claims 1 to 4 is implemented, the method according to any one of claims 5 to 12 is implemented, the method according to any one of claims 13 to 18 is implemented, or the method according to any one of claims 19 to 22 is implemented.
